Europäisches Patentamt

European Patent Office

Office européen des brevets

(19)

(11) Publication number: **0 164 991**

**A2**

# EUROPEAN PATENT APPLICATION

(12)

(21) Application number: 85303919.6

(22) Date of filing: 04.06.85

(51) Int. Cl.⁴: **G 21 C 3/32**

(30) Priority: 06.06.84 US 617856
06.06.84 US 617855
06.06.84 US 617854

(43) Date of publication of application:
18.12.85 Bulletin 85/51

(84) Designated Contracting States:
BE FR GB IT SE

(71) Applicant: WESTINGHOUSE ELECTRIC CORPORATION
Westinghouse Building Gateway Center
Pittsburgh Pennsylvania 15235(US)

(72) Inventor: Burns, David Clarence
130 Autumn Drive
Trafford Pennsylvania(US)

(72) Inventor: Kauric, Charles Edward
Box 286, Rd No. 6
Irwin Pennsylvania(US)

(72) Inventor: Persang, Joseph Charles
2781 Homehurst Avenue
Pittsburgh Pennsylvania(US)

(72) Inventor: Nee, John Donald
506 Cherry Drive
Trafford Pennsylvania(US)

(72) Inventor: Green, Richard Alexander
29902 Barwell Street
Farmington Hills Michigan(US)

(72) Inventor: Hornak, Leonard Paul
13640 Bruce Drive
North Huntingdon Pennsylvania(US)

(74) Representative: van Berlyn, Ronald Gilbert
23, Centre Heights
London, NW3 6JG(GB)

(54) Metal disintegration machining apparatus.

(57) In the replacement of old split-pin assemblies of a guide tube of a nuclear reactor by new split-pin assemblies, each old split-pin assembly is severed into readily removable fragments by metal disintegration machining apparatus. This apparatus includes an insulating block, e.g., of glass, and a metal disintegration electrode which is axially perforated; water under pressure is injected into the arc region through the perforation.

Also disclosed is a pick-and-put tool, and a crimping tool for crimping a locking cap to the nut of a replaced new split-pin assembly.

EP 0 164 991 A2

.⁄...

FIG.1.

1

# METAL DISINTEGRATION MACHINING APPARATUS

## BACKGROUND OF THE INVENTION

This invention relates to nuclear reactors and has particular relationship to the replacement of old split-pin assemblies by new split-pin assemblies in the guide tubes of reactors.

Typically, a guide tube includes an upper section and a lower section which is referred to as the lower guide tube (LGT). The split-pin assemblies are mounted in the lower flange of the LGT. For each split-pin assembly, the flange includes an upper counterbore and a lower counterbore. The split pin extends into the lower counterbore with its shank extending through a hole in a partition between the counterbores, into the upper counterbores. The upper part of this shank is threaded. The split pin is held by a nut which is threaded onto the threaded shank and seats on the upper surface of the partition. When the nut is threaded onto the shank of the split pin, the split pin is drawn into the lower counterbore and its flange engages the lower surface of the partition between the counterbores. For various reasons, it has become necessary to replace the split-pin assemblies which were secured in the guide tubes in the past. The assemblies to be replaced are herein referred to as old split-pin assemblies. In the old split-pin assemblies, a dowel pin passes through the nut and is welded to the nut. A split-pin assembly extends into a vertical slot in the wall of the guide tube. The part of this wall which extends above and laterally bounds this slot limits the access to the split-pin assembly.

In the replacement of an old split-pin assembly by a new assembly, it is necessary that the old assembly be removed. Both the guide tube and the old assembly are highly radioactive and they must be processed in a pool of water. The guide tube is a massive complicated body of stainless steel. Its fabrication is highly time consuming and labor intensive and it is for this reason costly; typically, the cost is about $80,000. It is accordingly indispensable that the old split-pin assemblies be removed without damaging the guide tube. It is an object of this invention to accomplish such removal of the old split-pin assembly.

The nut and split pin of an old split-pin assembly cannot be separated by untorquing the nut because the nut is welded to the dowel pin. It has been proposed that the old split-pin assembly be removed by a remotely operable robotic saw. This expedient has proven not practicable because it demands a highly complicated operation difficult to carry out, without damaging the guide tube, particularly in the limited region near the slot in the guide. It is accordingly an object of this invention to provide apparatus and a method for removing an old split-pin assembly which shall effect the removal in a relatively uncomplicated manner and shall preclude damage to the guide tube.

The old split-pin assembly is severed by a metal-disintegration machine tool predominantly into two fragments; one fragment (herein referred to as the "nut fragment") consists of the residual part of the old nut and part of the old split pin threaded to it, and the other consists of the residual part of the split pin. The latter is extracted from the lower counterbore of the flange and deposited in a trash chute by a pin puller and expeller on the clamp-and-index tool. At this point it becomes necessary to remove the nut fragment from the upper counterbore of the flange and then to secure the new split-pin assembly

0164991

in this flange. A difficulty which is imposed in carrying out this phase of the replacement is that the new nut is only partially accessible for mechanical processing. The nut extends from the upper counterbore into a slot in a wall of the LGT which has the shape of, and is referred to as, a "mousehole". Only a limited area external to the "mousehole" is accessible for removal of the nut fragment and for insertion in the upper counterbore of a new nut and threading it to a new pin. In addition, the tines (or leaves) of the pins must be properly aligned with respect to the top flange of the guide tube. This invention concerns itself with the phase of the overall replacement operation involving the removal of the old nut fragment and the securing to the flange of new split-pin assemblies.

This invention provides a method and apparatus for removing the nut fragments from the upper counterbore of the flange, and, after the upper and lower counterbores have been cleaned, to secure new split-pin assemblies in the flange without damage to the LGT.

The insertion of a new pin includes the proper alignment of the tines and proper torquing of the nuts to the pin.

The replacement is carried out in two stages. In the first stage the nut fragment is removed from the upper counterbore and is replaced by a new nut. The conditions imposed on the tooling and the practice for accomplishing this purpose is as follows:

1. It must be capable of operation within the space confines imposed by, and in cooperation with, the other tooling in the robotic work station.

2. It must be capable of operation in the limited space available external to the "mousehole".

3. There must be accessibility for supplying new nuts from the deck above the pool.

4. The tooling and practice must be capable of operation, when coupled with a programmable computer, in an automatic mode.

4

0164991

5. The tooling must be capable of operating in borated water.

In the second stage the new split-pin assembly is secured to the flange by threading and properly torquing a new nut onto a new split pin. The tooling and practice for this stage must meet the following conditions:

1. It must be capable of orienting the split pins in an LGT properly with respect to the top flange of the lower guide tube.

2. It must be capable of operation in the limited space external to the "mousehole".

3. It must be capable of operation in the space confines imposed by, and in cooperation with, the other tools at the robotic work station.

4. There must be accessibility for the supply of new split pins from the deck above the pool.

5. The tooling and practice must be capable of automatic operation when coupled to a computer.

6. It must be capable of operating under borated water. It must be capable of applying the proper torque to the nut.

This invention provides tooling for removing the nut fragment and installing new split-pin assemblies in the lower flange of a LGT of a reactor without damage to the LGT which shall meet the above conditions.

In processing a guide tube for replacement, the LGT is separated from the upper section and transferred to the robotic work station where it is precisely positioned for processing. Next the old split-pin assembly is severed into fragments from the upper and lower counterbores by metal disintegration machining, the fragments are removed, the counterbores are cleaned, a new nut is placed in the upper counterbore, a new split pin is inserted through the lower counterbore and the new nut is torqued onto the new pin and seated on the base of the upper counterbore. At this point it is necessary to secure the new nut and new split pin together so that they do not rotate with reference to each other. In the old split-pin assembly, this object is accomplished by a dowel pin which traverses the nut and pin near their upper ends and is welded to the old nut. The old nut as well as the new nut is composed of AISI type 304 stainless steel or like alloy. This alloy cannot readily be welded under water. During the replacement the welded dowel-pin joint of the old split-pin assembly is replaced by crimped joint. For this purpose the nut is fabricated with a locking cap secured near its upper end and the new split pin is fabricated with an upper stem having grooves, specifically flutes. After the new nut is torqued onto the new split pin and secured in the upper counterbore, the locking cap extends above the new nut opposite to the flutes in the new split pin. It is necessary to crimp the locking cap securely into the flutes so as to preclude rotation of the new nut and pin relative to each other. It is an object of this invention to provide a crimping tool for accomplishing this object.

In creating a crimping tool one is confronted by a number of serious problems. The robotic work station includes six components in addition to the crimping tool. It is necessary that the crimping tool shall be capable of effective operation in cooperation with and within the limited space confines afforded by the other tools. It is also necessary that the crimping tool be capable of remote operation, from the robotic control center, either step-by-step manually or automatically under the commands of a programmable computer.

The new split-pin assembly, as mounted in the lower flange of the LGT, is accessible only over a cylindrical solid angle of about 180° and is not accessible from the top. As mounted in the lower flange of the LGT, the split-pin assembly, old and new, extends into the aforesaid "mousehole" of the LGT and is spanned above by the wall of the LGT whose edge bounds the "mousehole".

This invention overcomes the above drawbacks and disadvantages and to provide a crimping tool which shall be capable of effectively crimping the locking cap secured to the new nut of a new split-pin assembly into the grooves or flutes of the new split pin notwithstanding the limited access available to the locking cap. This invention provides such a tool that shall be capable of effective operation within the confines afforded by the other tools of the robotic work station. This invention teaches a method of crimping, uniquely suitable for crimping a locking cap to a new split pin within the limited access to the locking cap available and in the limited space of the robotic work station.

<u>SUMMARY OF THE INVENTION</u>

The invention in its broad form comprises apparatus for use in the replacement of an old split-pin assembly of a guide tube of a nuclear reactor by a new split-pin assembly, said old split-pin assembly including an old split pin and an old nut securing said old split pin to a flange on said guide tube, said old nut being threaded onto said old split pin and, a skirt of said old nut which is not threaded to said old split pin extending inwardly of said flange, said old split pin and said guide tube being radioactive; said apparatus including a metal disintegration machining tool having an electrode, means for mounting said tool under a pool of water in engagement with the old nut of an old split-pin assembly of a guide tube, which old split-pin assembly is to be replaced, said tool being mounted with said electrode in position to coact electrically with said old nut, and means which is connected to said tool for firing a disintegrating arc between said electrode and said old nut, said tool being mounted so that said electrode is at an angle such that the arc produces a hole in said nut and split pin, said hole extending through the old nut, outwardly of an upper surface of the guide tube, on an entrance side of the arc and penetrating over in a region extending to a region below the unthreaded portion of the nut but not through the nut, whereby said assembly is disintegrated into readily removable fragments,

0164991

without damage to the guide tube, one fragment including predominantly a portion of the old nut and the portion of the old split pin threaded to it and another fragment includes predominantly the remaining portion of the old split pin.

In a preferred embodiment described herein, each selected old split-pin assembly is broken down into readily removable fragments by a robotic metal disintegration machining tool. The tool and split-pin assembly are under a pool of borated water. The electrode is fed axially (feeding mode) towards the workpiece at a constant preset rate. While it is feeding into the workpiece it is also vibrating axially (vibrating mode) at approximately 60 C.P.S. typically. When the electrode moves close enough (vibrating mode) to the workpiece, so that the electrical potential exceeds the dielectric strength of the water, an arc is fired and passes between the end of the electrode and the workpiece. This arc causes a small particle of metal to be separated from the workpiece. As the electrode moves away (vibrating mode) from the workpiece the arc extinguishes. The metal particle is cooled and together with the gas generated, flushed away from the end of the electrode by a stream of water pumped through the end of the electrode and by suction of a far greater quantity of water produced by the suction system. The water flushed through the area moves at a high velocity and carries a debris and gas with it.

The arc bores a hole through the assembly. The hole must meet two conditions: First, it must separate the assembly into fragments, an integral fragment, including what is left of the nut and the pin on which the nut is threaded and the other consisting of what is left of the remainder of the pin. Second, the hole must not include any part of the LGT or its flange.

To meet these conditions, reliance is placed on the fact that the internal thread of the nut begins well above the bottom rim of the nut so that as threaded onto the split pin, the nut has a skirt which is not threaded onto the pin. Typically, this skirt extends about .40 inch above the bottom rim of the nut.

The separation of the split-pin assembly into fragments, without damage to the flange, is achieved by feeding the electrode of the tool along a path at an angle defined by two points: a point where the arc is incident on the nut above the flange a sufficient distance to preclude damage to the flange and an end point below the region where the nut is threaded onto the pin but within the skirt of the nut.

When the electrode reaches the end point the arc, moved along this path, has cut through the entire cross section of the split pin, the assembly is severed into two fragments, one, including what is left of the nut and the part of the pin on which it is threaded, and the other, the remainder of the pin. Since the wall of the skirt is not penetrated, the flange is not damaged. Typically, the incident arc is about .08 inch above the flange. The power supply for the disintegrating arc typically operates between 19 and 21 volts and supplies current which varies between 25 to 50 amperes and 250 to 300 amperes as the electrode moves into and out of engagement with the old split-pin assembly. The positioning of the electrode is accomplished by an electrode guide block of nonmetallic non-electrically conducting material, typically a high-softening temperature glass. The guide block is a cavity whose internal surfaces are shaped so that the guide block seats precisely laterally on the nut and horizontally on the surface of the flange adjacent to the split-pin assembly. The guide block has a cylindrical hole which terminates at the cavity. The electrode is slideable in the hole at the above-defined angle so that the incident arc, between the electrode and the assembly, is at the proper distance above the LGT flange and the end arc is at a point where the pin has been cut through but the arc has not penetrated the skirt. The electrode has a flange which engages a shoulder in the hole at a position such that the movement of the electrode in the hole which is bored in the split pin is stopped before the skirt is penetrated. The block has holes through which water is sucked in to flush the debris and gas out of the region of the arc.

Described herein is a hopper for new nuts, a guide for loading new pins, a pick-and-put tool, and a pin-insertion/torque tool. All tools are affixed to a strongback assembly which is mounted against the wall of the pool such that the guide tube is kept underwater during processing of the split-pin assemblies. The pick-and-put tool is located on the strongback at a vertical location such that it can be positioned horizontally to perform operations at both the guide tube flange and nut hopper. The LGT can be rotated back and forth through 180° so that the severing, fragment removal, cleaning, and nut replacing operations can be coordinated in the limited space available. The severance and brushing take place in the 0° position of the LGT; the nut fragment removal and nut replacement in the 180° position. The sequence is as follows:

0° position -- sever old split-pin assembly and dispose of pin fragment,

180° position -- remove and dispose of nut fragment,

0° position -- clean counterbores,

180° position -- insert new nut,

180° position -- insert new pin, torque nut to pin.

The hopper includes a plate having in its top a curved groove, typically in the form of a circular arc extending over about 270°. The groove constitutes a magazine for the new nuts and includes a loading port near one end and a stop near the other end. The stop locates the nut for pick up by the pick-and-put tool. The hopper includes a double-acting hydraulic rotary cylinder (ROTAC) which rotates an arm extending over the groove. A funnel

0164991

is provided above the loading port and it serves as a temporary mount for a long tube extending from the deck. A new nut is dropped into the tube which guides it to the loading port. Once the nut is in the loading port, the rotary cylinder is activated and swings from its "home" position behind the inserted nut, thus pushing it around the groove towards the stop. The swing arm is then swung back to its "home" position and the procedure repeated until the nut hopper is filled (26 nuts).

The elevation of the hopper is such that a nut removed from the unloading port by the pick-and-put tool is at the proper level for insertion in the upper counterbore of the LGT.

The pick-and-put tool includes a clamp and a plurality of hydraulic cylinders for moving the clamp in three degrees of motion; i.e., vertically and in any selected direction horizontally. Its function is to remove and dispose of the old nut fragment and remove a new nut from the hopper and insert it in the upper counterbore.

In removing the old nut fragment the pick-and-put tool performs the following operation after the LGT is rotated 180° from the old-split-pin-assembly severance position:

1. Moves inwardly toward the guide tube from its "home" (storage) position to an advanced position where it is stopped by a preset stop.

2. Rotates typically approximately 90° to position the jaws of the clamp about the old nut fragment. An adjustable stop, which acts against the guide tube flange, is provided to assure that the jaws are properly positioned with respect to the nut.

3. Clamps the old nut fragment.

4. Lifts the fragment from the upper counterbore.

5. Rotates back to the advanced position, typically about 90° (reverse of step 2).

6.   Moves back to its "home" position (reverse of Step 1).   This motion is also arrested by an adjustable stop which is preset to locate the nut directly over a trash chute which guides the nut fragment to a disposal basket; the stop also positions the clamp to engage a new nut fragment in the unloading port of the hopper.

7.   The nut is lowered (reverse of Step 4).

8.   The nut is unclamped (reverse of Step 3), thus, allowing it to drop into the chute.

Before the nut insertion operation which follows, the upper and lower counterbores are cleaned by the brush tool and the rotary cylinder is actuated to advance a new nut to the nut removal port.

The following operational steps are performed in the insertion in the upper counterbore of a new nut after the LGT is rotated 180° for the cleaning position:

1.   While located in its "home" position, the clamp is rotated against the nut hopper.   The adjustable preset stop which properly locates the jaws of the clamp with respect to the nut fragment in the guide tube, also locates these jaws with respect to the new nut in the hopper.

2.   Clamps the new nut.

3.   Lifts the new nut from the hopper.

4.   Rotates back to home position (reverse of Step 1).

5.   Moves toward LGT (Step 1 of nut removal).

6.   Rotates 90° to position the new nut above the LGT upper counterbore (Step 2 of nut removal).

7.   Lowers the nut into the counterbore (reverse of Step 3).

8.   Unclamps the nut (reverse of Step 2).

9.   Rotates back 90° (reverse of Step 6).

10.   Returns to "home" position (reverse of Step 5).

Among the advantages of the pick-and-put tool are the following:

12

0164991

1. By changing the sequence of operations, the tool can perform the two required operations.

2. The tool is capable of being operated automatically when coupled with a programmable computer.

3. The tool is capable of operating manually and when operated in a manual mode, the tool can correct undesired abnormalities which may arise during the course of operation.

4. The tool is capable of being aligned prior to its disposition in the pool.

5. The tool can be operated remotely when submerged in the borated water of a reactor pool.

6. The tool is composed of stainless steel and is resistant to the borated water.

Once the new nut is positioned in the upper counterbore, the replacement of the old split-pin assembly by the new split-pin assembly is completed by the pin-insertion/torque tool. This tool includes a blade for receiving and aligning new split pins, and a wrench for threading the new nut onto the new pin. The tool also includes a hydraulic cylinder for moving it from the "home" or storage position to an operating nut-torquing position. The outer surface of the new nut is splined a portion of its length. Typically the nut has 10 uniformly-spaced splines; i.e., 36° per spline. The wrench typically has 5 splines. With the tool in the home position a new pin is deposited through a locating funnel on the blade with its tines straddling the blade. To achieve this purpose, the pin is threaded into the end of a long tube on the deck over the pool. The tube is inserted into the pool and the split pin engaged with the blade with its tines straddling the blade. The tube is then unthreaded from the split pin and removed. The new nut has already been positioned on the upper counterbore and rests on the annular base of this counterbore. The pin-insertion/torquing tool now performs the following operations:

0164991

1. The blade and, with it, the engaged split pin is oriented with its tines at either 0° or 90° depending on what end of the hydraulic cylinder which controls the blade is pressurized. This allows for the two split pins of the LGT being processed to be inserted perpendicularly to each other.

2. The pin-insertion/torque tool is moved along a set of rails by a hydraulic cylinder from its storage position toward the LGT. A preset stop positions the tool such that the split pin is precisely located under the hole in the LGT flange coaxial with the hole and the counterbore, and the wrench is above the nut.

3. Actuation of another hydraulic cylinder raises the blade (and, with it, the split pin) upwardly through the LGT hole and through the nut to the level where the nut contacts the pin threads. An arm which is above the wrench provides a stop to prevent the nut from being pushed out of the counterbore when the pin threads contact the nut threads.

4. Actuation of another hydraulic cylinder lowers the wrench onto the nut. Spline engagement may or may not occur during this step.

5. Actuation of yet another hydraulic cylinder rotates the wrench. A preset stop limits this rotation of 36° (one-tenth of a turn). Engagement of the splines will occur during this step if it had not occurred previously.

6. The wrench is lifted from the nut (reverse of Step 4).

7. The wrench is rotated back 36° (reverse of Step 5).

8. Steps 4, 5, 6, and 7 are repeatedly cycled. Since the nut is held down by the hold-down arm, as the nut threads to the pin, the pin is drawn upwardly allowing the flange of the pin to enter and seat in the lower counterbore of the LGT flange. When seating occurs, the wrench stalls due to a preset pressure limit. Since the pressure on the pin insertion cylinder (Step 3) is maintained during

0164991

the cycling, the split of the pin is kept engaged to the blade of the loading tube and keeps the pin properly oriented.

9. After the wrench first stalls, the pressure on the torquing hydraulic cylinder is increased to a precisely controlled higher pressure preset to a maximum magnitude. Under the higher pressure the nut is locked against the base of the upper counterbore. By controlling this higher pressure the proper torque load, which will preclude damage to the nut, or split pin, is achieved.

10. After the nut is fully torqued, the wrench is raised and rotated back to its starting position (Steps 6 and 7).

11. The blade is lowered (reverse of Step 3).

12. The pin-insertion/torque tool is returned to the storage position (reverse of Step 2). As the tool nears the storage location both the wrench and the arm used to hold the nut in the counterbore engage stops which swing them out from above the blade. This is necessary to allow loading of the next pin. Both the wrench and arm motions are resisted by springs which subsequently swing them back in place when the tool is moved back in toward the LGT.

The pin-insertion/torque tool according to this invention has the following advantages:

1. By changing, i.e., reversing, the sequence of operation, the tool can be used to either torque or untorque the nut.

2. The system is capable of being operated manually or, when coupled with a programmable computer automatically.

3. When operated in a manual mode, the tool can correct abnormalities which may arise during the course of operation.

4. The tool is capable of being aligned where it is to be used and then inserted in the pool.

5. The tool is capable of operating in the confining region imposed by the mousehole in the side of the LGT.

6. Because both the nut and wrench are splined, sufficient gripping between them can be attained to obtain the high torque magnitudes necessary even though the gripping area is limited (180°) by the interference of the "mousehole".

7. The tool can be operated by remote control when submerged in borated water from the deck above the pool.

8. The tool is composed of stainless steel and is not corroded by the borated water.

Also described herein is a crimping tool including a crimping mechanism, and a support for the crimping mechanism. The support is in the standby state of the tool latched in a retracted setting and when unlatched is displaceable to an operating setting in which the crimping mechanism is positioned to carry out a crimping operation on a new split-pin assembly.

The crimping mechanism is an "ice tong" shaped structure having jaws pivotal on a pivot pin. Near one end each jaw is provided internally with a tapered crimping pin. The jaws are mounted on the pivot pin with their crimping pins face-to-face and are moveable between a setting in which the crimping pins are retracted and a setting in which the crimping pins are in crimping position. Externally each jaw has a cam surface. The jaws are mounted on the pivot pin near one end of the support. Inwardly of the jaws the crimping mechanism includes a "C"-shaped frame which straddles the support and is connected to a fluid cylinder which is capable of moving the C-frame forward and backward along the support. The frame carries cam-follower rollers which engage the cam surfaces on the jaws and, when the "C"-frame is moved by the cylinder, displace the jaws between the retracted setting and the crimping setting.

16

0164991

Typically the support is a cantilever which is latched in vertical position and is mounted pivotal, by a fluid cylinder, both about a horizontal axis and about a vertical axis. When the support is unlatched, it is pivoted vertically about the horizontal axis to a stop, during a part of the stroke of the piston of the cylinder. Then, during a continuation of the stroke of the piston, it is pivoted horizontally about the vertical axis, setting the crimping mechanism in its crimping setting. Then the "C"-frame is actuated by its cylinder to crimp the locking cap to the new split pin.

A crimping operation is performed by carrying out the following successive steps:

1.   The support for the crimping mechanism is unlatched.

2.   The support is swung from it retracted or storage position to its operating position.

3.   The "C"-frame is actuated to travel forward closing the jaws of the crimping mechanism on the locking cap and crimping the cap into the flutes of the split pin.

4.   The "C"-frame is actuated to travel backward, i.e., is retracted, opening the jaws.

5.   The crimper-mechanism support is returned to its vertical retracted position.

6.   The support is latched in the retracted position.

At least one advantage of the crimper tool described herein is that it is capable of being operated by remote control either manually or automatically on commands from a programmable computer. When operated in the manual mode, the crimper tool can recover from abnormal maloperation which may arise during its use. The crimper tool can be aligned in the field prior to its mounting in the robotic work station for operation.

BRIEF DESCRIPTION OF THE DRAWING

A more detailed understanding of the invention may be had from the following description of preferred examples to be read and understood in conjunction with the accompanying drawing wherein:

Figure 1 is a diagrammatic view showing apparatus in accordance with this invention for separating an old split-pin assembly into readily removable parts;

Fig. 2 is a simplified view in isometric, with parts omitted for clarity, showing a metal disintegration machining tool in accordance with this invention;

Fig. 3 is a view in side elevation of the apparatus including the metal disintegration machining tool shown in Fig. 2;

Fig. 3A is a view in section taken along line IIIA-IIIA of Fig. 3;

Fig. 4 is a view in longitudinal section of the electrode assembly of the metal disintegration tool shown in Figs. 2 and 3;

Fig. 5 is a fragmental view in longitudinal section, enlarged, showing the electrode of the electrode assembly shown in Fig. 4;

Fig. 6 is an end view of the electrode taken in the direction VI of Fig. 5;

Fig. 7 is a view in side elevation of the hydraulic chuck for holding the electrode of the metal disintegration machining tool in accordance with this invention;

Fig. 8 is a view in section taken along line VIII-VIII of Fig. 7;

Fig. 9 is a plan view of the guiding block of the tool according to this invention taken in the direction IX of Fig. 10;

Fig. 10 is a view in section taken along line X-X of Fig. 9;

Fig. 10A is a view in end elevation taken in the direction XA of Fig. 10;

Fig. 10B is a view in section taken along line XB-XB of Fig. 10A;

Fig. 11 is a plan view taken in the direction XI of Fig. 10;

18

0164991

Fig. 12 is a view in end elevation taken in the direction XII of Fig. 10;

Fig. 12A is a fragmental view in side elevation taken in the direction XIIA of Fig. 12;

Fig. 13 is a view in side elevation showing the blocks and the pipes connected to it;

Fig. 13A is a view in side elevation taken in the direction XIIIA of Fig. 13;

Fig. 14A, B, C, D is a diagrammatic view showing successive steps in the engagement of the metal disintegration tool in accordance with this invention with an old split-pin assembly and the flange in which the assembly is mounted;

Figs. 15 and 16 are a plan view with the electrode assembly omitted, and a view in side elevation in the direction XVI of Fig. 15, showing the relationship of the guiding block of the tool according to this invention and an old split-pin assembly and the flange just prior to engagement of the block and assembly and flange;

Figs. 17 and 18 are a plan view and a view in side elevation in the direction XVIII of Fig. 17, similar to Figs. 15 and 16, respectively, but showing the guiding block in engagement with the old split-pin assembly and flange;

Fig. 19 is a diagrammatic view in section showing the manner in which the electrode of the tool according to this invention penetrates the old split-pin assembly;

Fig. 20 is a photograph showing the relationship of the electrode and split-pin assembly in the practice of this invention;

Figs. 21 and 22 are photographs showing the nut and separated in pins as viewed in two directions generally at right angles to each other;

Fig. 23 is a fragmental view in isometric of an LGT whose split-pin assemblies are replaced using this invention;

Fig. 23A is a view in section taken along line IA-IA of Fig. 23;

Fig. 24 is a view in side elevation of a new split pin;

Fig. 25 is a plan view of a new nut;

Fig. 26 is a view in longitudinal section taken along line IV-IV of Fig. 25;

Fig. 27 is a view in longitudinal section showing a new split-pin assembly installed in an LGT;

Fig. 28 is a simplified view in isometric, with parts omitted in the interest of clarity, of the pick-and-put tool which uses this invention;

Fig. 29 is a plan view of the pick-and-put tool;

Fig. 30 is a view, slightly enlarged, in side elevation, and partly in section, taken in the direction VIII of Fig. 29;

Fig. 31 is a view in end elevation and partly in section taken in the direction IX of Fig. 29;

Fig. 32 is a plan view of the bell lever for pivoting the clamp of the pick-and-put tool;

Fig. 33 is a plan view showing the relationship to each other of the pick-and-put tool, the LGT and the nut hopper;

Fig. 34 is a plan view showing predominantly the nut hopper but also showing its position to the pin-insertion/torque tool;

Fig. 35 is a fragmental view in transverse section taken along line XII-XII of Fig. 34;

Fig. 36 is a view in side elevation taken in the direction XIV of Fig. 24;

Fig. 37 is a simplified view in isometric with parts omitted in the interest of clarification, showing the pin-insertion/torque tool using this invention;

Fig. 38 is a plan view showing the pin-insertion/torque tool in the storage or "home" position where the pin is placed on the blade and in the position where the nut is threaded onto the pin;

Fig. 39 is a plan view of the pin-insertion/torque tool;

Fig. 40 is a view in side elevation taken in the direction XVIII of Fig. 39;

Fig. 41 is a view in longitudinal section taken along line XIX-XIX of Fig. 40;

Fig. 42 is a view in longitudinal section taken along line XX-XX of Fig. 41;

Fig. 43 is a view in longitudinal section taken along line XXI-XXI of Fig. 41;

Fig. 44 is a view in section taken along line XXII-XXII of Fig. 41;

Fig. 45 is a view in transverse section taken along line XXIII-XXIII of Fig. 40;

Fig. 46 is a view in transverse section taken along line XXIV-XXIV of Fig. 45;

Fig. 47 is a diagrammatic view showing how a new split pin is transferred to the pin-insertion/torque tool;

Fig. 48 is a plan view enlarged of a new split-pin assembly which is subjected to a crimping operation in the practice of this invention;

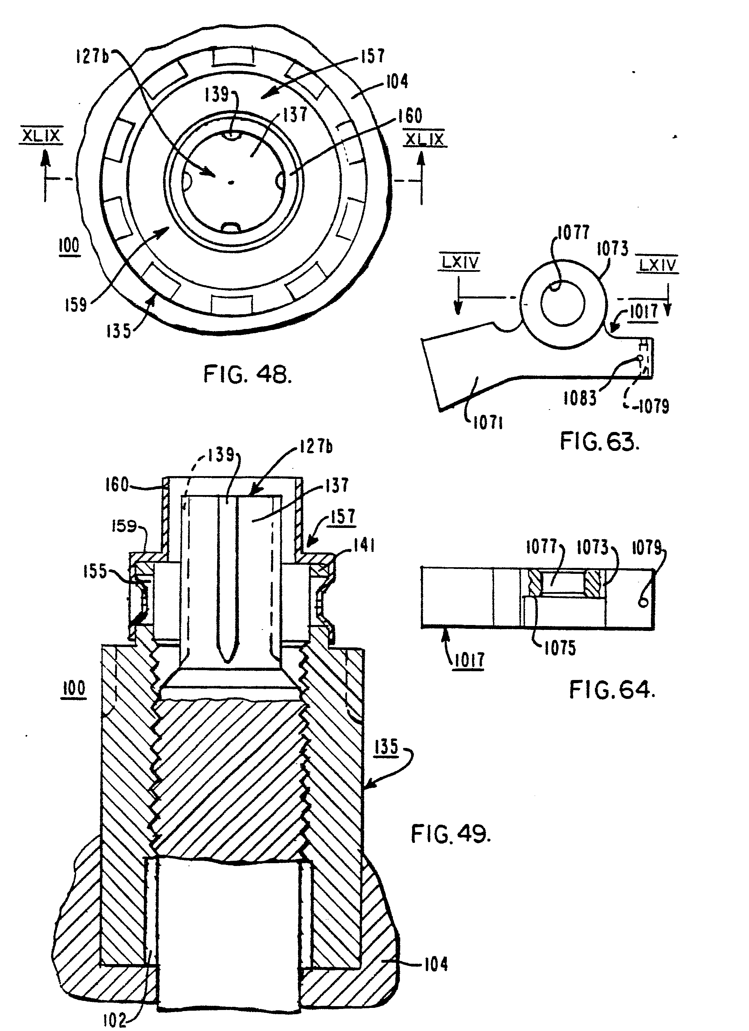

Fig. 49 is a view in section taken along line II-II of Fig. 48;

Fig. 50 is a simplified view in isometric showing generally the crimper tool in accordance with this invention with parts omitted for clarity;

Fig. 51 is a view in front elevation of the crimper tool showing the crimper in full lines in the operating position and in broken lines in the retracted position;

Fig. 51A is a fragmental plan view of the extension of the piston rod which positions the crimping mechanism showing the manner in which it operates;

Fig. 52 is a view in side elevation, partly in section of the crimper in operating position taken in the direction V of Fig. 51;

Fig. 53 is a fragmental plan view showing an adjusting structure for the crimping mechanism;

Fig. 54 is is a fragmental view in side elevation, and partly in section, of the part of the crimper which performs the crimper operation;

Fig. 55 is a fragmental view in transverse section taken along line VIII-VIII of Fig. 54;

Fig. 56 is a view in front elevation, and partly in section, showing particularly the lower portion of the support for the crimper with the crimper in the retracted position;

Fig. 57 is a fragmental view in side elevation, and partly in section, taken in the direction X of Fig. 56 showing the camming action which advances the crimping head of the crimper horizontally;

Fig. 58 is a fragmental view in transverse section taken along line XI-XI of Fig. 56;

Fig. 59 is a fragmental view in transverse section taken along line XII-XII of Fig. 56;

Fig. 60 is a fragmental view in end elevation, taken in the direction XIII of Fig. 52, showing the mechanism which produces the crimping;

Fig. 61 is a fragmental view in transverse section taken along line XIV-XIV of Fig. 60;

Fig. 62 is a fragmental view in section taken along line XV-XV of Fig. 51;

Fig. 63 is a plan view of a crimping jaw used in the crimper tool; and

Fig. 64 is a view in side elevation, and partly in section, taken in the direction XVII of Fig. 63 showing a fragment of the crimper tool housing in section.

DETAILED DESCRIPTION OF THE EMBODIMENT

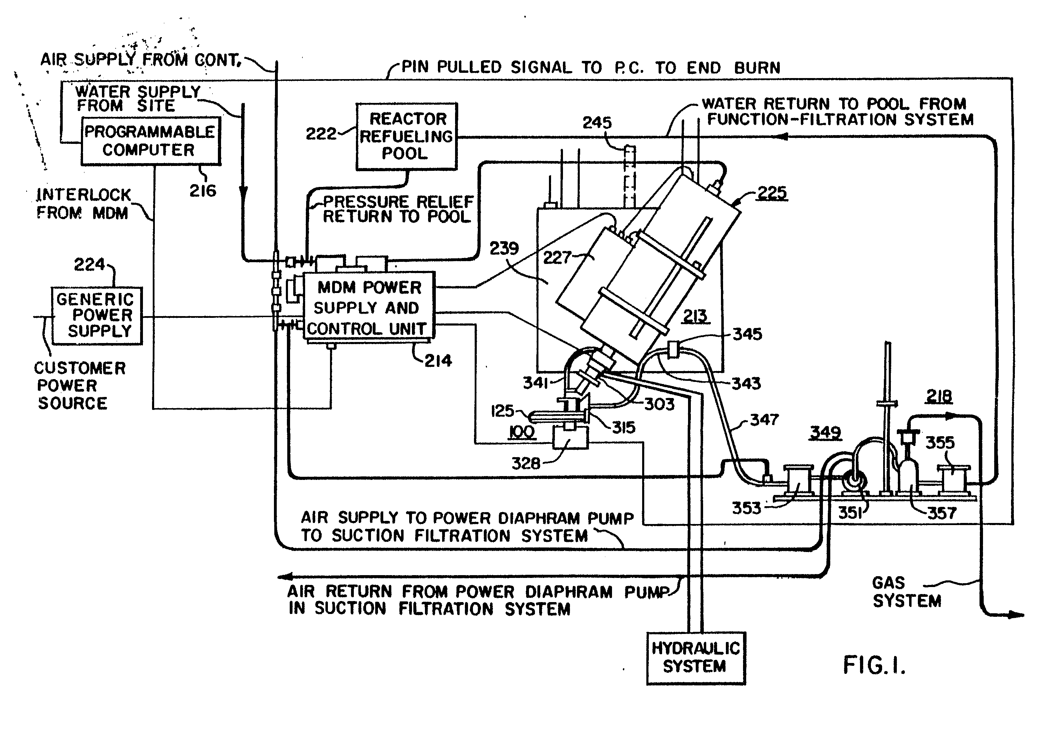

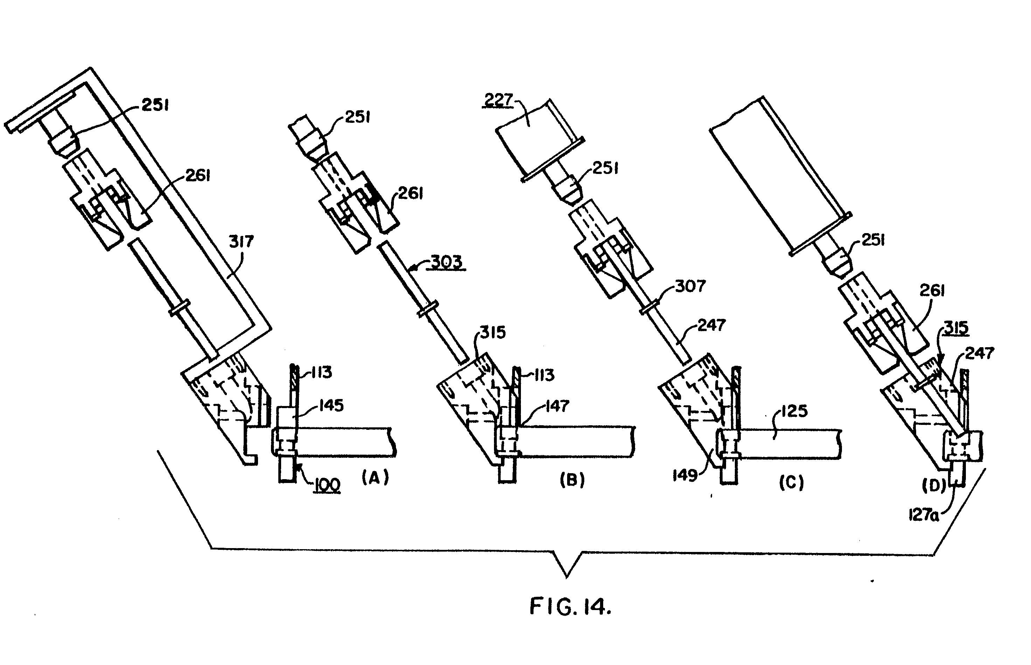

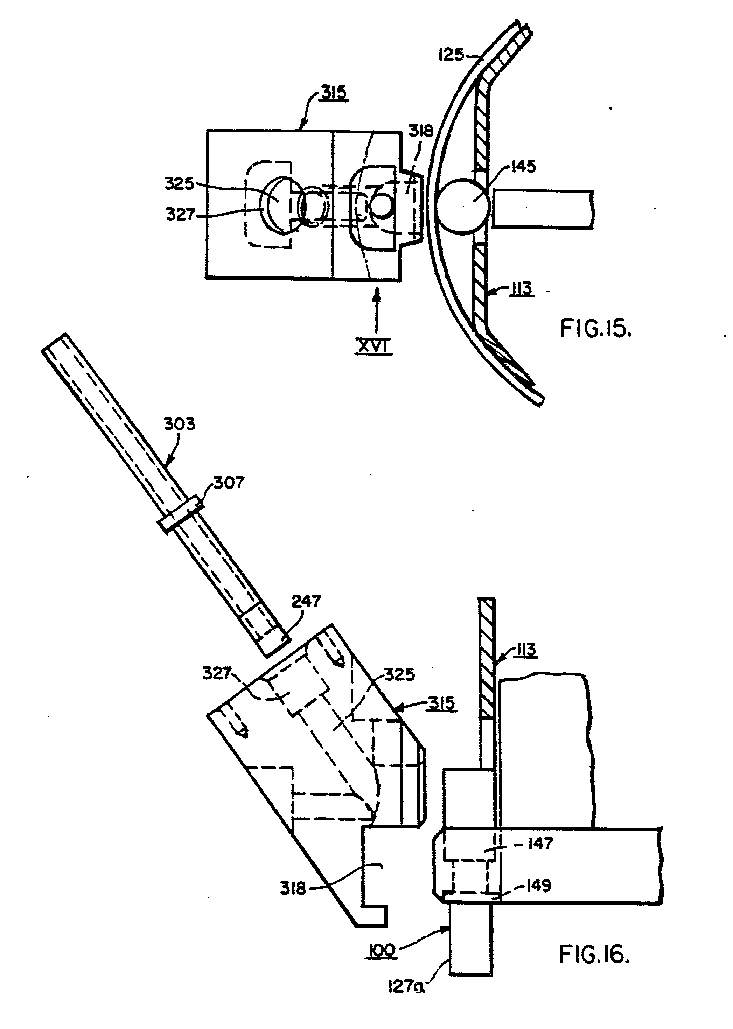

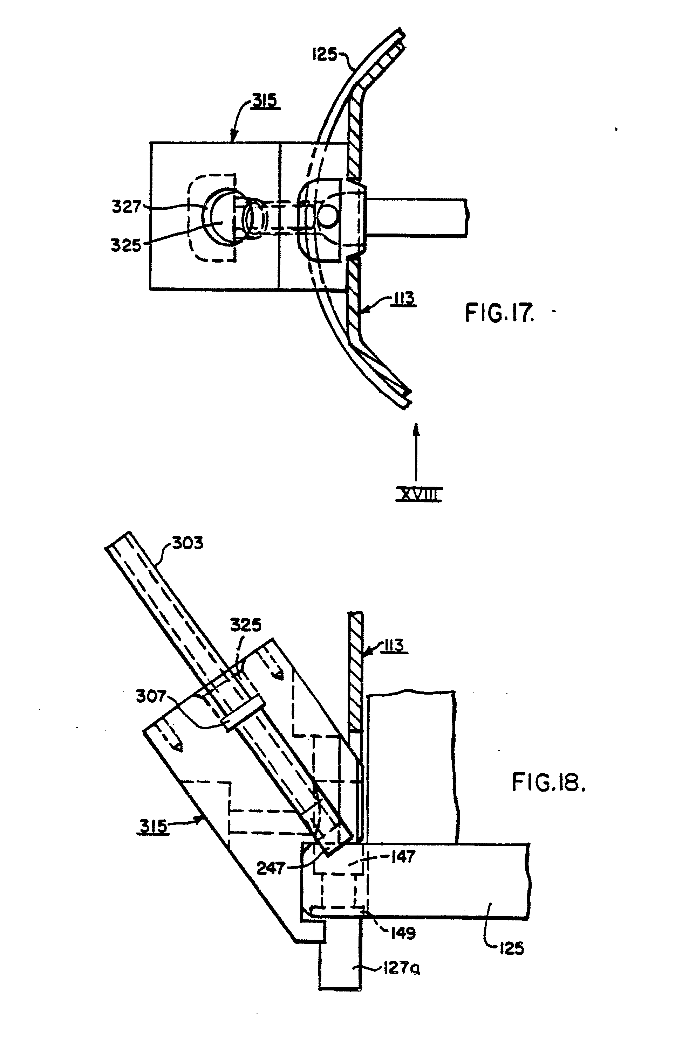

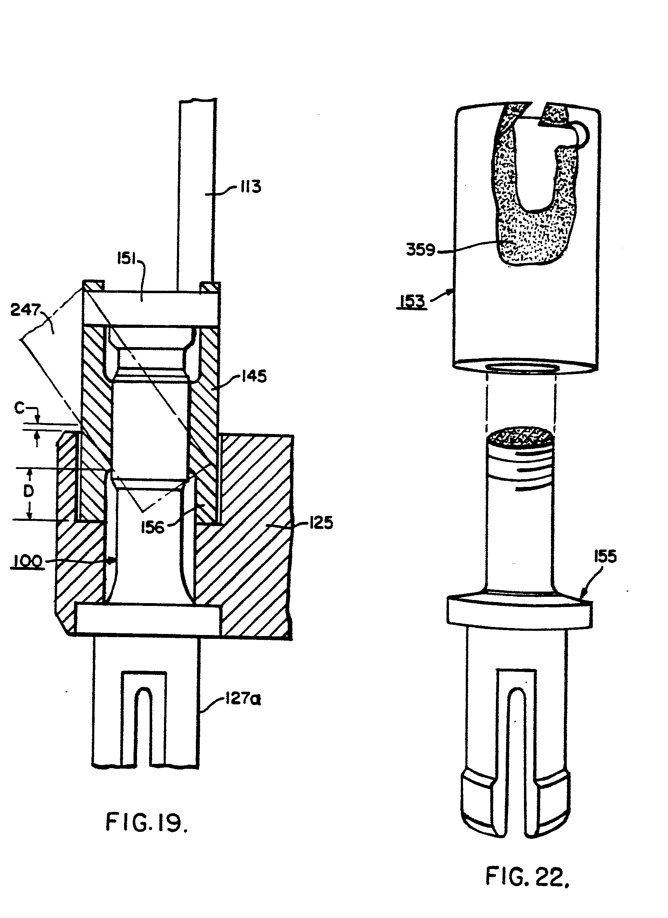

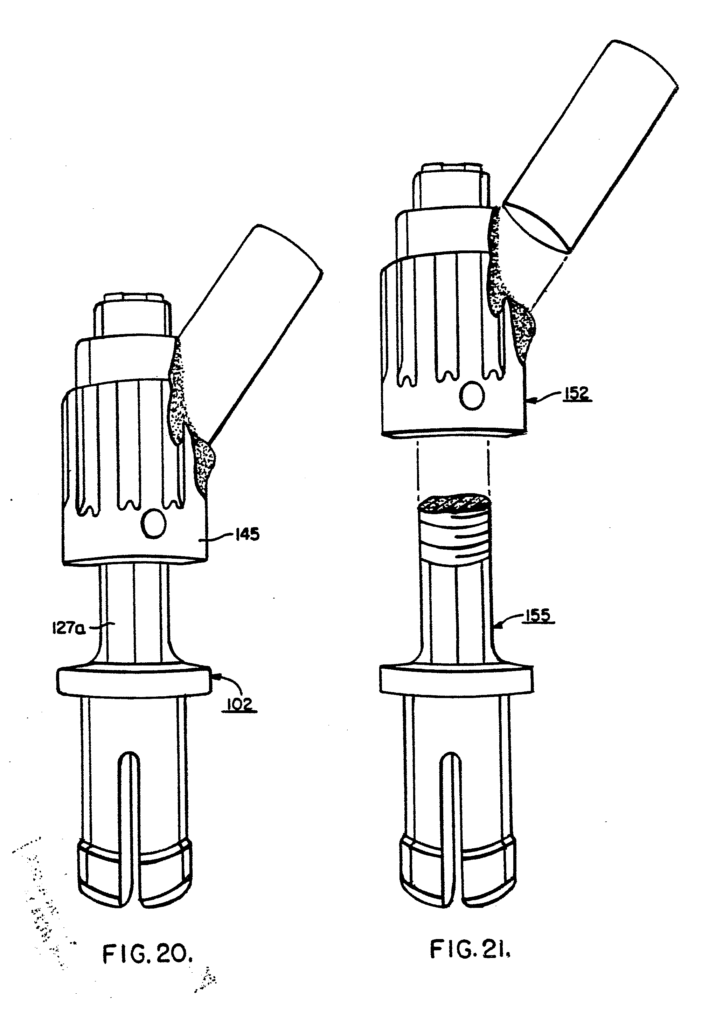

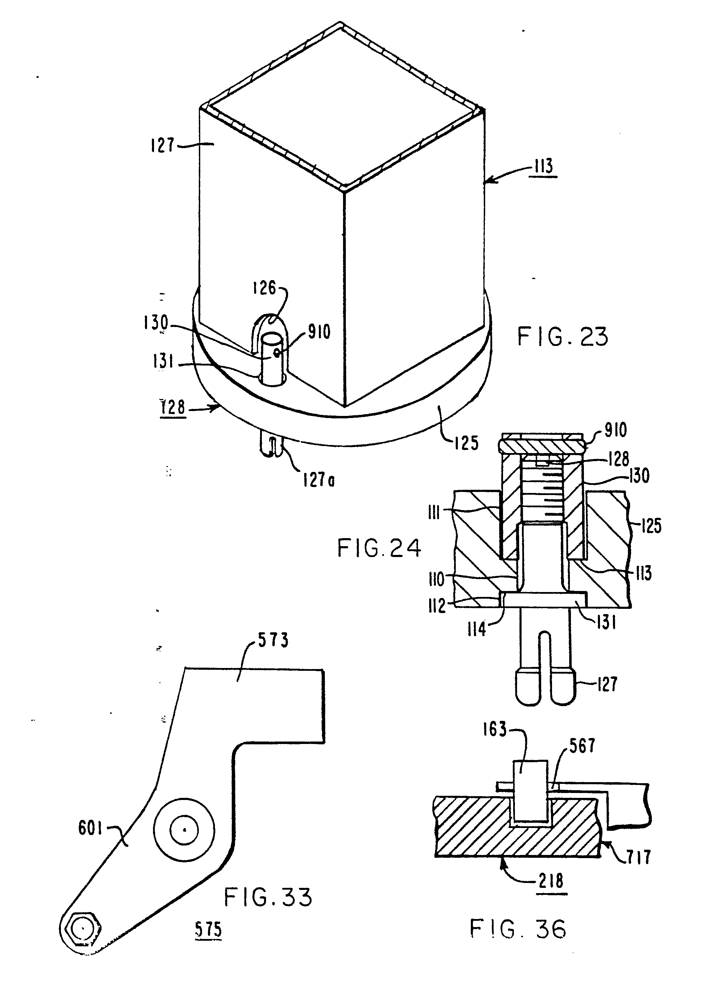

The apparatus provided in accordance with this invention serves to separate an old split-pin assembly 100 (Figs. 1, 14-20) into readily removable fragments. As shown in more detail in Calfo, the assembly 100 includes a split pin 127a which is secured by a nut 145 in counterbores 147 and 149 of flange 125 of LGT113. A dowel pin 151 transverse to the top of the nut 145 is welded to the nuts locking the pin and nut together so that the assembly cannot be separated by untorquing the nut 145 and removing the nut and pin 127a separately. In the practice of this invention, the assembly 100 is separated by a metal disintegrating arc into two fragments 153 and 155 (Figs. 21, 22): one, 153, including predominantly what is left of the nut 145 and the part of the pin 127a to which it is threaded and the other, 155, including predominantly the remainder of the pin. The part 153 is removable from the upper counterbore 147 and the part 155 is removable from the lower counterbore 149. The separation is feasible because the nut 145 has a skirt 156 (Fig. 19) at the bottom which is not threaded to the nut. Figs. 20-22 show the processing of a new split-pin assembly 102 which replaces the old split-pin assembly 100 but it is adequate for the purpose of illustrating the practice of this invention.

The apparatus according to this invention includes a metal disintegration machining tool (MDM) 213 (Fig. 1) a power supply and control unit 214 for the tool 213, a programmable computer 2-16, a suction filtration system 218 and a hydraulic system 220. The MDM and the suction filtration system are immersed in the reactor refueling pool 222 shown as a separate block. The power supply and control unit 214 is itself supplied from a generic power supply 224, usually a commercial power supply, at the site where the old split-pin assemblies are to be replaced. The power supply and control unit 214, the computer 216, the generic power supply 224, and the hydraulic system are located at a robotic command center above the pool 222 where the personnel taking part in the replacement are not subject to hazard from radioactivity. The electrical and fluid flow lines between the various components are labelled in Fig. 1 and their description need not be repeated in the text.

0164991

The MDM 213 includes a head 225 (Figs. 1, 2, 3) within which a spindle 227 is mounted. A casing 229, sealed against penetration of water, is mounted on the head 225. The casing contains a motor (not shown) which drives the spindle 227 through a rack and pinion (not shown). The spindle 227 is movable relative to the head 225 and the parts connected to the head.

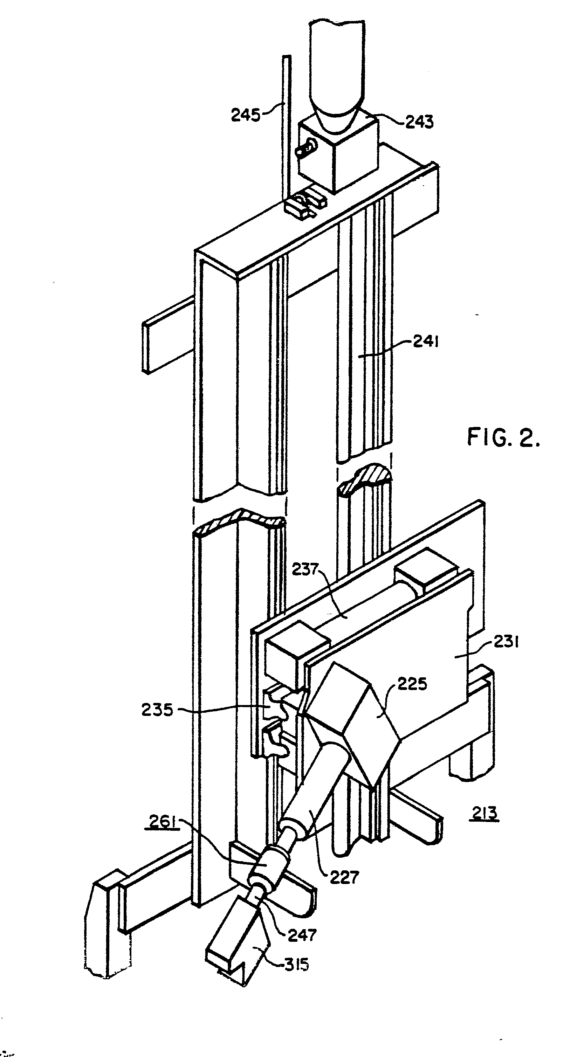

The head 225 and spindle 227 are mounted on carriage 231 (Fig. 2). The carriage 231 is movable generally horizontally on tracks 235 by a hydraulic cylinder 237 mounted on a plate 239. When a split-pin assembly is being severed, the plates 239 and the parts on it are under the pool 222. The plate 239 is movable vertically to the robotic control center on tracks 241 by electric motor 243 through chain 245 so that the electrode 247 can be replaced.

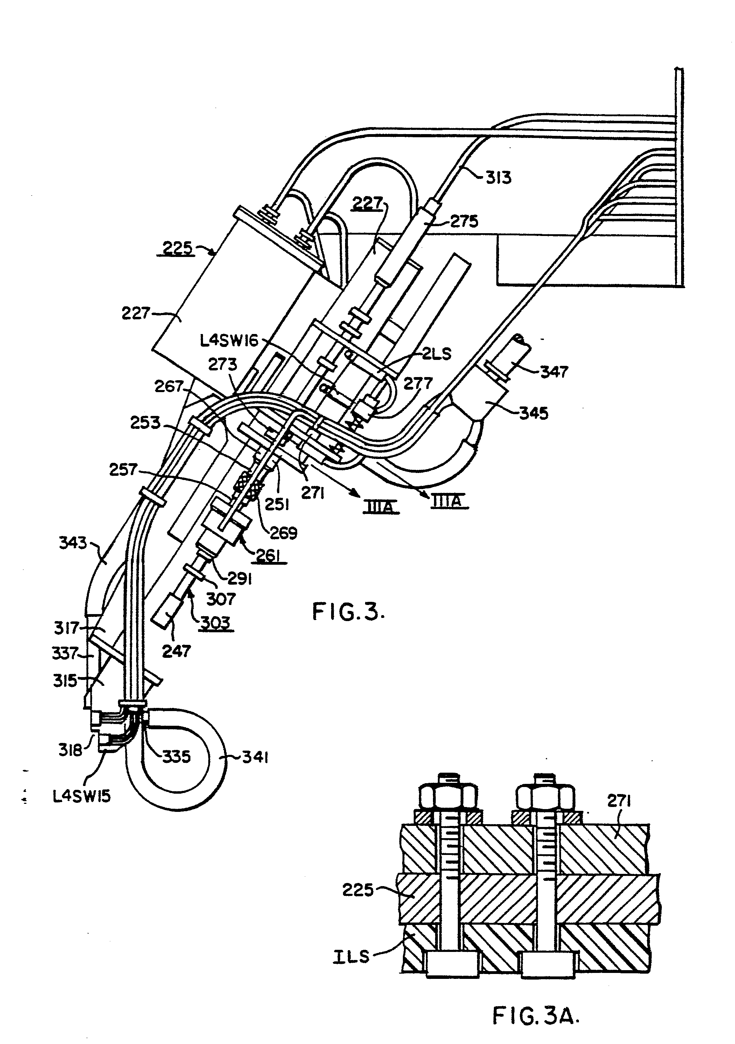

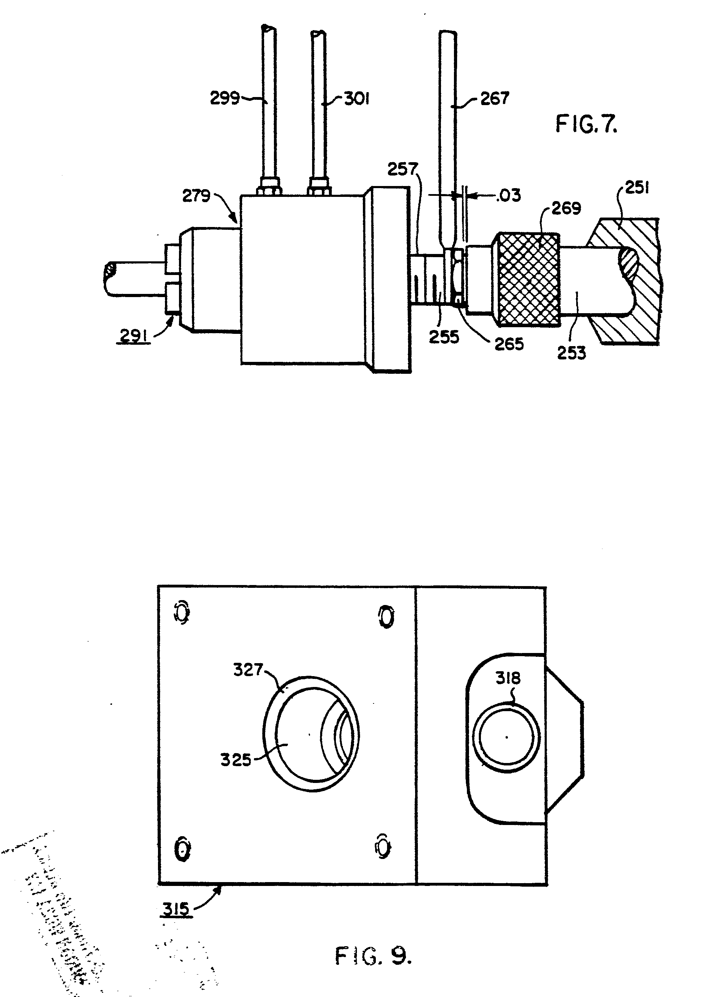

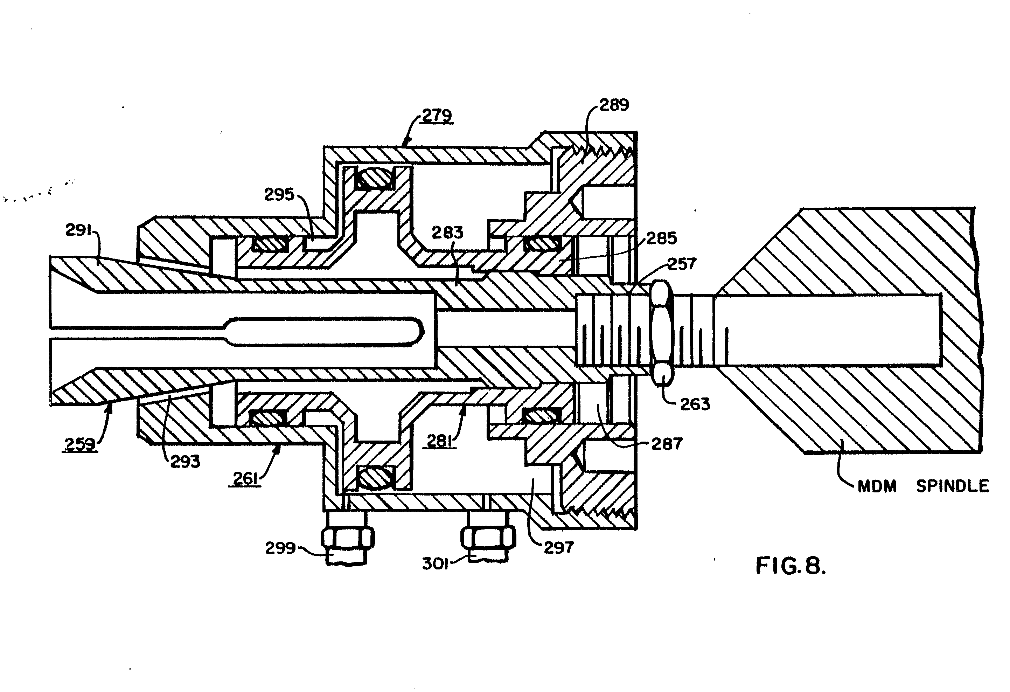

The spindle 227 is an elongated member from which a chuck 251 (Figs. 3, 7) extends. The chuck 251 is herein referred to as the spindle chuck. A cylindrical rod 253 is supported by the spindle chuck 251. At its end, the rod 253 carries a stud 255. The stud 255 is threaded onto a sleeve 257 which terminates outwardly in the collet 259 (Fig. 8) of the electrode chuck 261. A jam nut 26b is threaded onto the stud 255 outwardly of the sleeve 257. The jam nut 26b tightens the terminal 265 of the power cable 267 against the sleeve 257. The spindle is vibrated by a magnet (not shown) by means of a circuit (not shown) similar to a conventional door bell circuit. A knurled nut 269 threaded on rod 253 controls the amplitude and frequency of the vibrations.

Limit switches 1LS and 2LS are connected by bracket 271 to the head 225 (Figs. 3, 3A). The purpose of these switches 1LS and 2LS is described in Calfo. The bracket 271 also supports another limit switch L4SW16 whose function is to stop the inward motion of the spindle 227 and the electrode 247 when, after severing the pin 127a, the disintegrating arc has impinged on but not penetrated

0164991

nut 145. The switches 1LS, 2LS and L4SW16 are actuated by actuators 273, 275, 277, respectively. Limit switches 1LS and 2LS may be overridden by mechanism 277.

Electrode chuck 261 (Fig. 8) includes, in addition to the collet or jaw 259, a housing or cylinder 279 and a piston 281. The collet 259, cylinder 279 and piston 281 are coaxial. The collet body 283 has an outward radial projection which engages an inward shoulder on the stem 285 of the piston. A lock nut 287 is threaded onto the body 283 inwardly of the sleeve 257. A ring-shaped cover 289 is threaded into the outer end of the cylinder 279. The leaves 291 of the collet 259 are externally tapered near the top. Below their tops but along the taper, the leaves pass through, and are spaced by a short spacing from an opening in the cylinder 279. The walls 293 of the opening have approximately the same taper as the leaves. There are separate annular cavities 295 and 297 between the cylinder 279 and the piston 281. Cavities 295 and 297 are supplied with fluid through hoses 299 and 301, respectively. The supply of fluid through hose 299 to cavity 295 moves cylinder 279 inwardly. The tapered surface 293 of this cylinder functions as a cam causing the leaves 291 to move into clamping setting. Supply of fluid to cavity 297 through hose 301 causes the cylinder to retract permitting the lever 291 to reset to non-clamping setting.

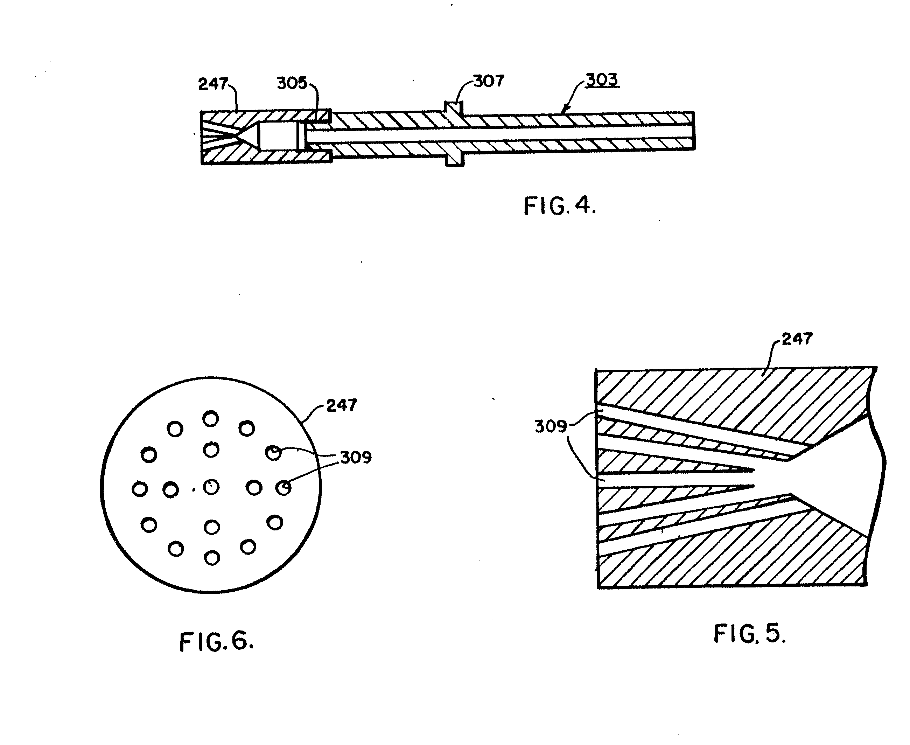

The collet 259 supports the electrode assembly. The electrode assembly (Figs. 4, 5, 6) includes a hollow cylindrical electrode holder 303 having an externally threaded tip 305 and having a flange 307 intermediate its ends. The electrode 247 has an internally threaded sleeve and is hollow for a portion of its length. Perforations 309 radiate from the end of this hollow portion of electrode 247. The sleeve is threaded onto tip 305 and the threaded joint is secured by epoxy resin. The spindle 227 has a hollow channel 311 (Fig. 7) along its length and the spindle chuck 251 and electrode chuck 261 are hollow. Water under pressure is injected into channel 311 through

0164991

hose 313 and is emitted from the end of the electrode through perforations 309. Typically, the pressure is about 50 pounds per square inch and about 1/2 gallon per minute of water flows out of the end of the electrode.

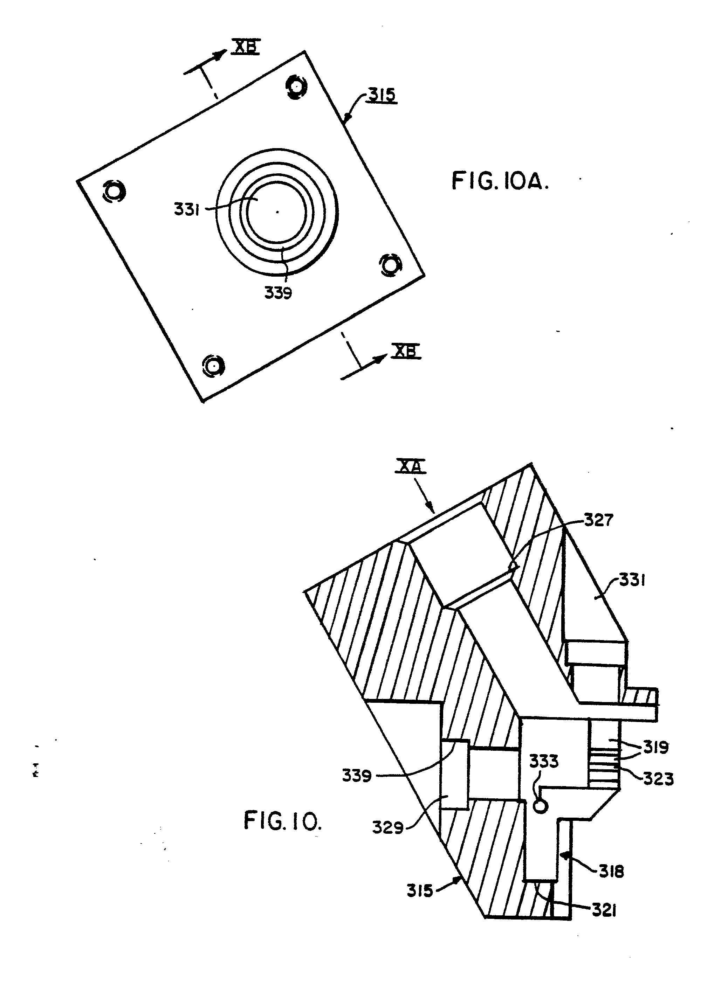

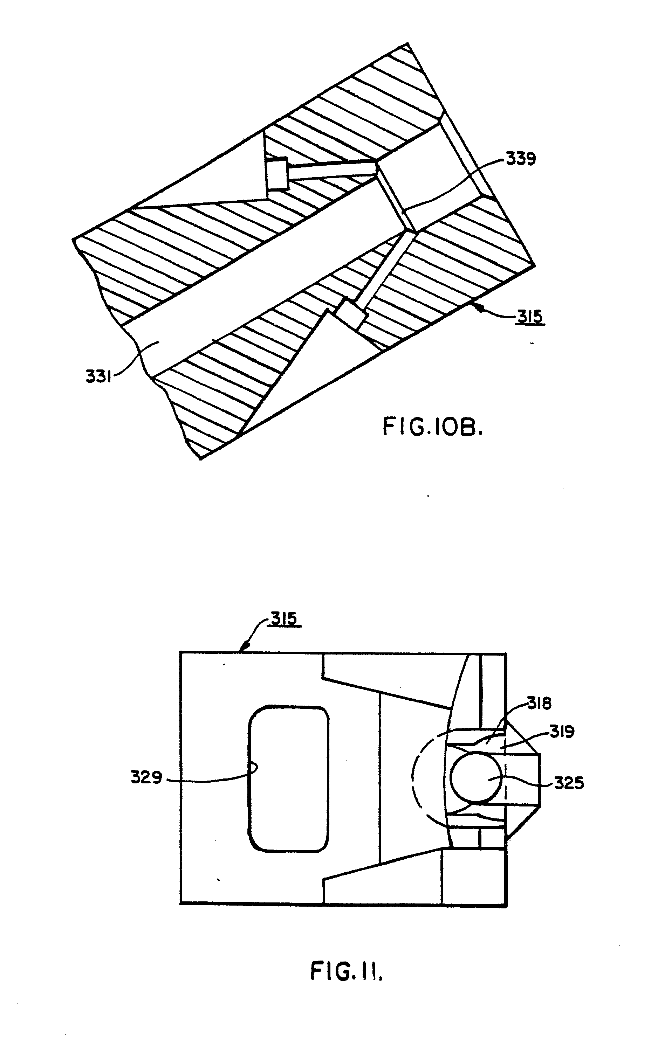

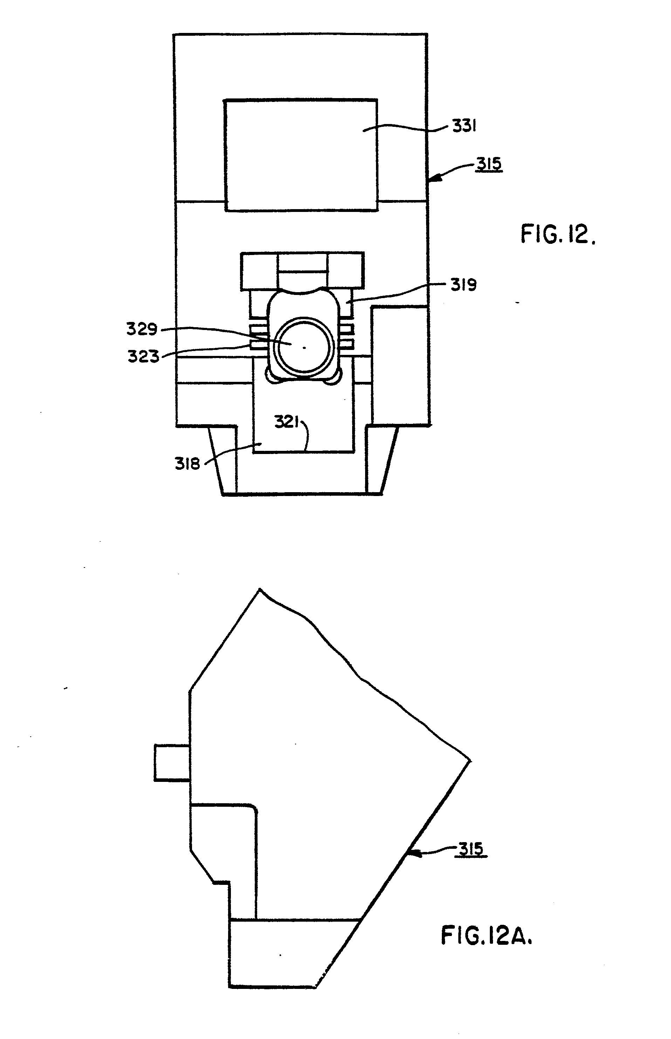

A nonmetallic electrically insulating block 315 (Figs 3, 9-13) is supported on a bracket 317 (Fig. 3) from the head 225. The block 315 has a cavity 318 having vertical and horizontal walls 319 and 321 shaped to seat against the nut 145 of an old split-pin assembly 100 and on and against the adjacent surface of the LGT flange 125. Limit switches L4SW15 and L4SW14A and L4SW14B (only L4SW14B shown) are mounted on the lower end of block 315 (Fig. 3). The actuation of L4SW15 signals that the block 315 is properly seated on the surface of the flange 125 extending from the upper counterbore through which the nut 145 extends. Actuation of switches L4SW14B and/or 14A signals that block 315 is properly seated laterally against the side wall of the flange 125. The surface 319 of the block 315 which seats against the nut 145 has ridges 323 (Figs. 10, 12). The block 315 has a cylindrical hole 325 which terminates inwardly at the surface of the nut 145 against which the block 315 seated. The hole 325 is expanded at the top providing a shoulder 327. The electrode 247 and the part of the holder 303 below the flange 307 are dimensioned to slide in the hole 325 while being maintained substantially coaxial with the hole. The hole 325 is at such an angle that an electrode 247 is incident on the nut 145 a distance C (Fig. 19) above the flange 125 which is long enough to preclude damage to the flange. The hole is also at such an angle that at the end of the burning operation the arc has penetrated completely through the old split pin 127a above the lower rim of the skirt 156. The skirt has a length d. Typically c is about 0.08 inch and d 0.40 inch. The inward movement of the electrode is stopped by the engagement of the flange 307 with the shoulder 327 (Fig. 10). The hole 325 is so dimensioned that the electrode is stopped when its top reaches the inner surface of

0164991

the skirt 156 (Fig. 19) but does not penetrate the skirt. During the separation operation, the pin is engaged by the pin puller and expeller 328. Once the pin 127 is burned through the pin puller and expeller pulls out the pin fragment 153 (Figs. 21, 22). The nut fragment 155 is removed by a pick-and-put tool.

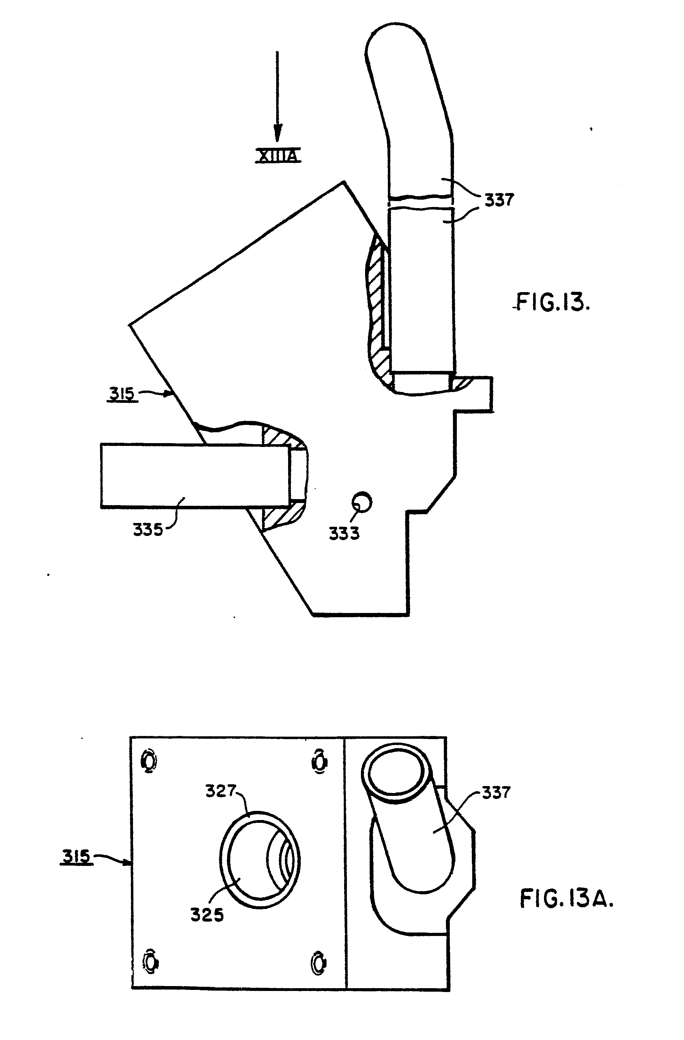

Holes 329 and 331 (Fig. 10) penetrate through opposite side walls of the block 315. The axes of the holes are approximately at right angles to each other and at 45° to the axis of the hole 325 and electrode 247 and holder 303. The holes 329 and 331 terminate in the region of cavity 318 where the arc is fired. There are also holes 333 (Figs. 10, 13) on opposite sides of the block 315 which also terminate in the cavity 318 where the arc is fired. Pipes 335 and 337 (Fig. 13) extend into the holes 329 and 331 resting against shoulders 339 between the inner and outer parts of the holes. Hoses 341 and 343 (Fig. 3) are connected to the pipes 335 and 337. Outwardly, the hoses terminate in a Y-block or manifold 345 from which a common conductor 347 extends. The common conductor is connected to the suction filtration system 349 (Fig. 1). The pipes 335 and 337, the hoses 341 and 343, the Y-block 345, the common hose 347 and the suction filtration system are all under the pool 222.

The suction filtration system 349 (Fig. 1) includes a suction pump 351, filtration tanks 353 and 355 and a gas separator 357 interposed between the tanks. The tank 353 contains cartridges for separating out the larger radioactive particles (typically 50 micron minimum size) from the disintegration of the old split-pin assembly 100 and the tank 355 contains cartridges for separating out the residual small particles (typically 5 micron minimum size).

The gas separator 357 separates out the gas from the water. The gases are predominantly hydrogen, oxygen; the quantities of tritium are not sufficient to cause concern for radiation hazard. On the completion of an MDM operation or at longer intervals, the tops are removed from the tanks 353 and 355 with a long-handled 0164991 cartridges are then removed and disposed of in a trash chute with another long-handled tool. The gas from the separator 357 is transferred to a waste facility in the containment of the reactor.

During the severance of the split-pin assembly 100, the radius of the hole 359 (Fig. 22) which is bored in the assembly is only 0.020 inch to 0.025 inch greater than the radius of the electrode 247. The suction of pump 351 must be adequate to withdraw the water from the small gap between the electrode 247 and the hole and there must be adequate water to remove the debris accumulation. The debris accumulation is removed by the action of pump 351 which is a high-volume diaphragm pump. The pump performs two principle functions: first, it sucks in the water of the pool 222 through the holes or ports 329 and 331 and the holes 333. This water flushes the debris from the end of the electrode where the arc produces the disintegration. The debris is conducted with the water through the filters 353 and 355 and the gas separator 357 (Fig. 1). The ports 329 and 331 are of large diameter. Second, it sucks in water through the clearances between the nut 145 and the surfaces 319 and 321 of the cavity 318 of the guide block 315, particularly the clearances between the ridges 323 in wall 319 (Figs. 10, 13) and the holes 333. These clearances are dimensioned large so that the volume of water sucked in from the pool 222 is large; typically about 4 to 10 times the volume pumped through the perforations 309 in the electrode or about 2 to 5 gallons per minute. With a high total volume of water sucked from the pool, the speed of, and force exerted by, the water which flows through the hoses 343, 345 and 347, the tanks 353 and 355 and the gas separator 357 is high. The solid particles (debris) and the gas bubbles are maintained well in the flow.

Fig. 23 shows the bottom end of a lower guide tube (LGT) and Fig. 23A is a cross-sectional view of an old split-pin assembly mounted in the guide tube flange. The

**0164991**

LGT is of generally square cross section having flat vertical walls 127. A circular flange 125 is welded to the lower end of the walls. Two 180° spaced-through holes 110, counterbored on both the top 111 and bottom 112, are provided in the flange for mounting the split-pin assemblies (only one is shown on the sketch). Directly above each hole there is an opening (referred to as a "mousehole" because of its shape) 126 in the wall which allows room for installation of the nut 130. Since the nut is partially inside the "mousehole", access to the nut is limited to the region external to the "mousehole". The mounting of the split-pin assembly to the flange consists of inserting the pin 127 up through the hole where the nut is threaded onto the pin and torqued to firmly seat the pin flange 131 and the nut shoulder 113 to the annuli of the respective counterbores. A cap 128 is then inserted into a slot on the top of the pin and a round bar 910 is inserted through radial 180° spaced holes in the cap in order to lock the pin to the nut.

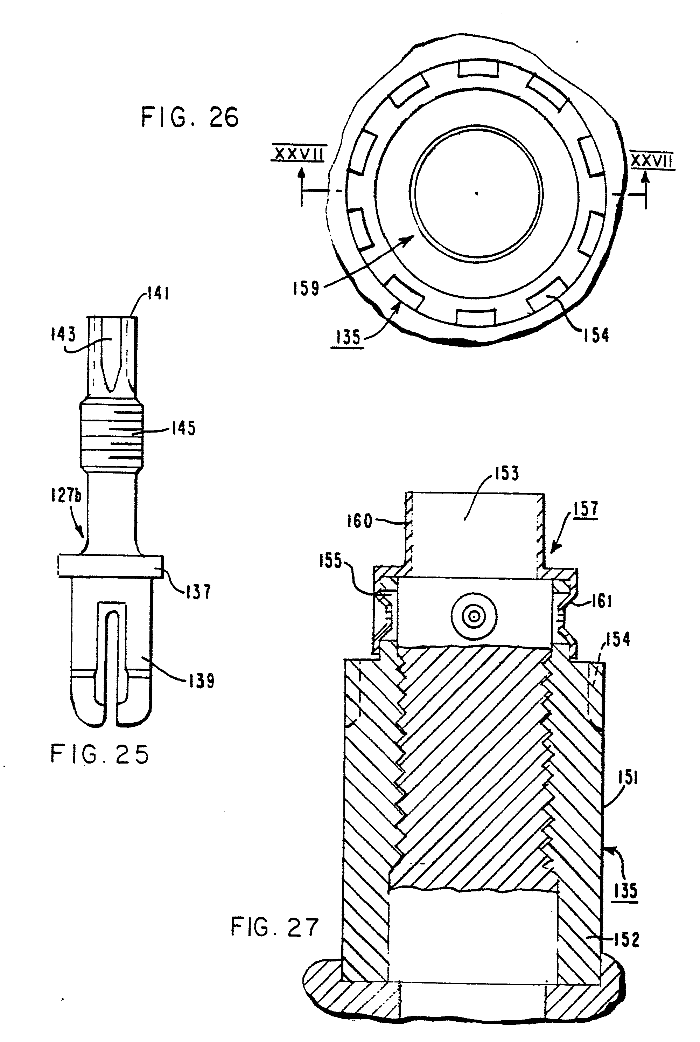

The old split-pin assembly (Fig. 23A) is, in the practice of this invention, replaced by a new split-pin assembly (Fig. 27). Like the old assembly the new assembly 133 (Fig. 25) includes a split pin 127b and a nut 135 (Fig. 26). The new split pin 127b (Fig. 24) has a flange 137. Tines or leaves 139 extend integrally from one face of this flange and a shank extends integrally from the opposite side. The shank terminates in a stem 141 having grooves 143 whose axial center lines are spaced peripherally by 90° so that there are four grooves in each stem 141. Between the stem and the flange 137, the shank has a threaded section 145.

The new nut 135 (Figs. 25, 26) includes an annular central section 151 which has an internal thread dimensioned to mesh with the thread on section 145 of the split pin 127b. A skirt 152 extends from section 151 at one end and a collar 153 at the opposite end. Below the collar 153, the nut has splines 154 along a portion of its

0164991

length. The collar 153 has a plurality of holes 155 in its surface. The center of the holes are spaced by 90° peripherally. A locking cap 157 is secured in the holes 155. The locking cap 157 has a pedestal 159 from which a tubular portion 160 extends. The locking cap is positioned over the collar 153 with the lower surface of the top of the pedestal 159 in engagement with the top of the collar. The peripheral surface of the pedestal is crimped at positions outwardly of the holes 155. The crimped surfaces 161 have the shape of the frustum of a cone and are reentrant into the holes. The crimping is such that the pedestal 159 grips the collar tightly so as to preclude rotation of the locking cap 157 relative to the collar 153 even if very high torques are impressed between the body of the nut 135 and the locking cap 157. Figs. 25 and 26 show the nut 135 as it is fabricated.

Fig. 27 shows a new split-pin assembly 133 as it is secured in the flange 125. The nut 135 is seated in the upper counterbore 131 and the flange 137 of the split pin 127b extends into the lower counterbore 162. The tines 139 of the split pin 127b resiliently engage the wall of a hole in the upper core plate 164. The tubular part 160 of the locking cap 157 is crimped in grooves 143 of the stem 141 of the new split pin 127b. The part 160 is crimped into only two opposite grooves 143 of each new split pin. For one split pin the part 160 is crimped into grooves generally coextensive with the apexes of the tine surfaces; in the other case the part is crimped into grooves centered along the center plane between the tines 139.

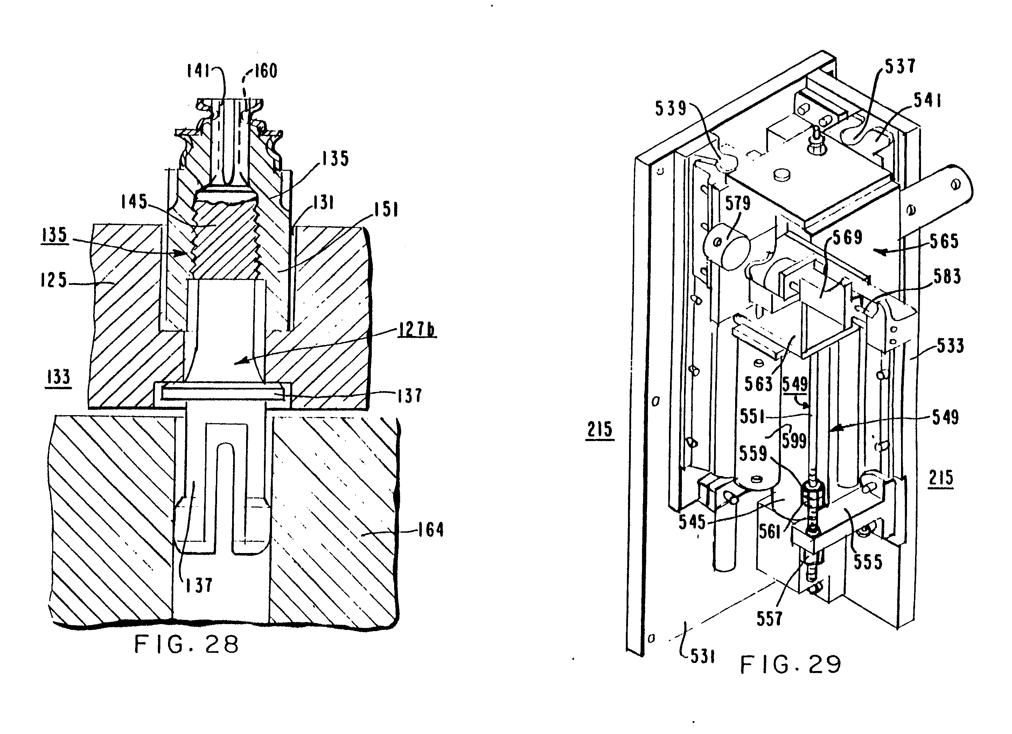

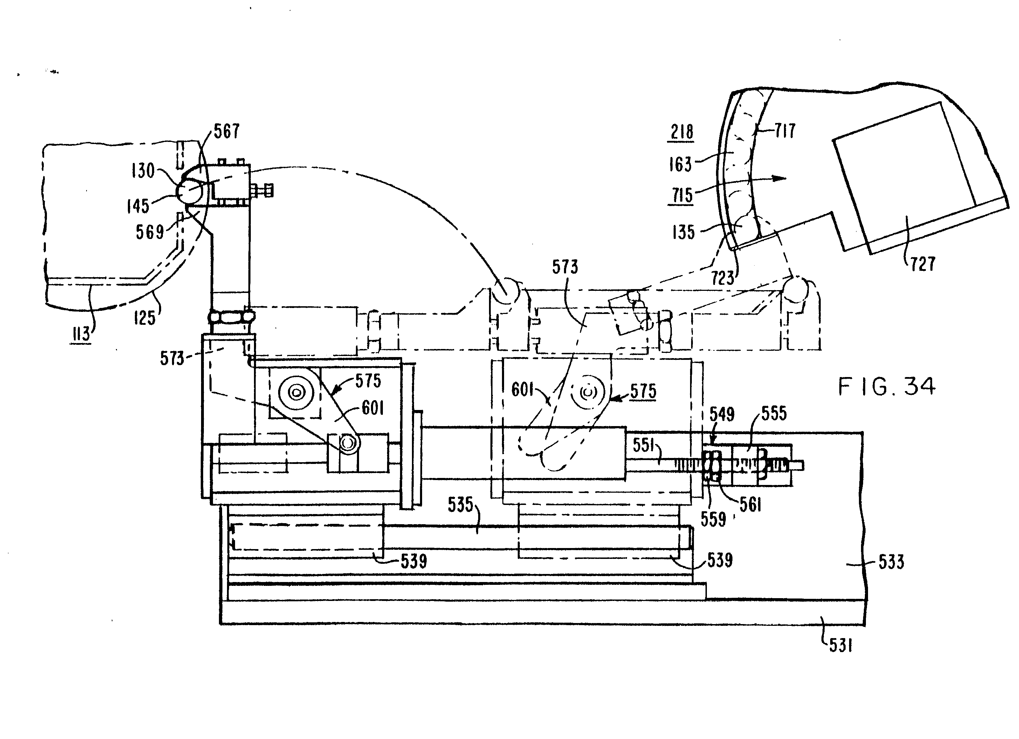

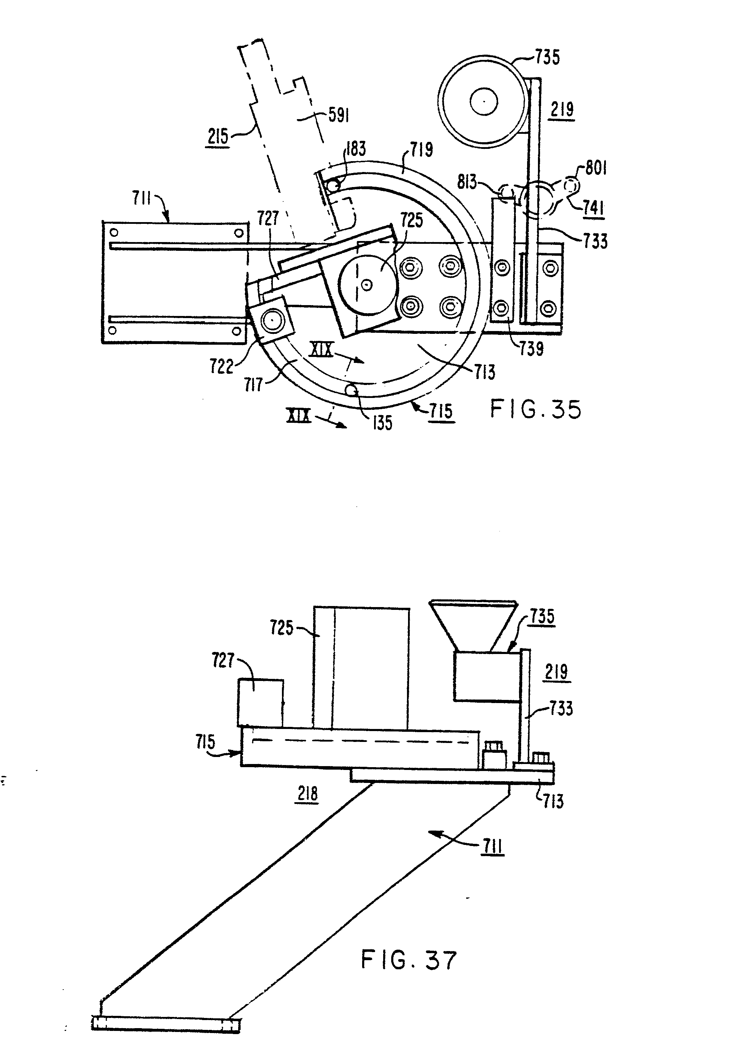

The phase of the replacement of the old split-pin assemblies by new assemblies involved in this invention will now be described. This phase is carried out with the pick-and-put tool 215 (Figs. 28-32), the new-nut hopper 218 (Figs. 33-36) and the pin-insertion/torque tool 219 (Figs. 37 to 47).

As viewed from above the pool, the pick-and-put tool 215 (Figs. 28-32) includes a vertical base plate 531

0164991

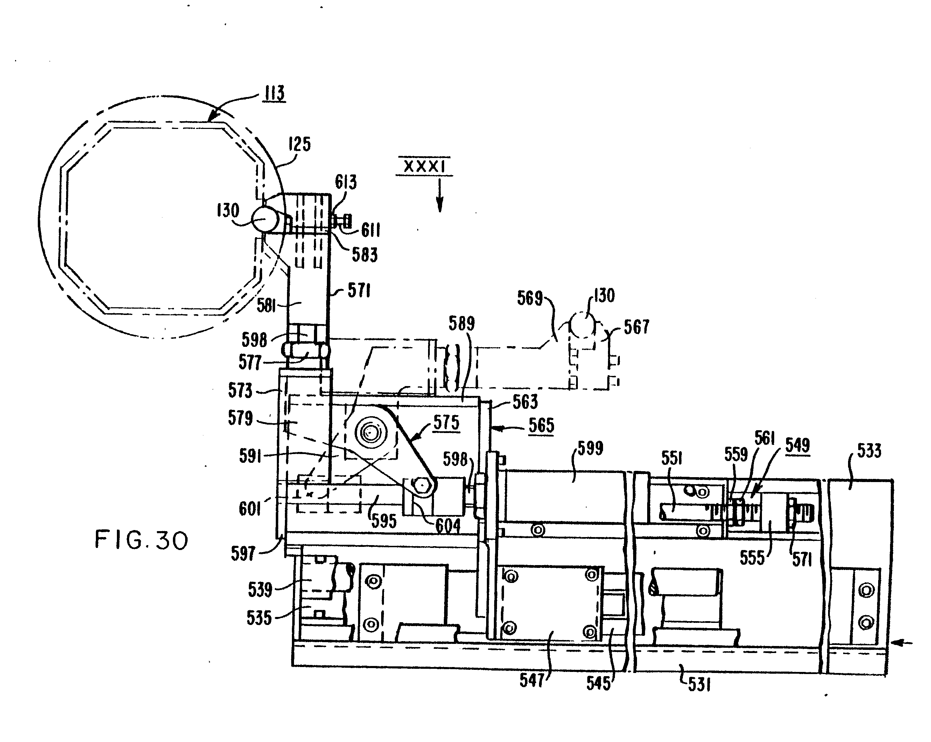

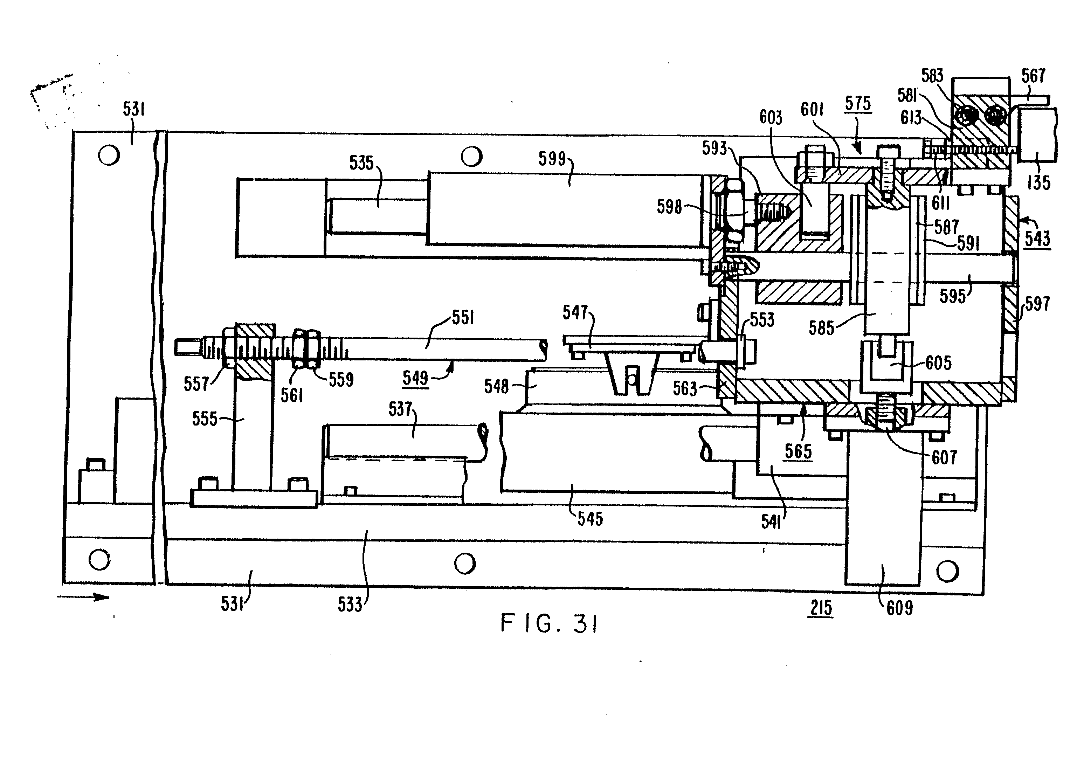

and a horizontal plate 533. These plates form an angular support, the horizontal plate 533 resembling a shelf. Guide rails 535 and 537 are mounted near the upper end of plate 531 and near the outer end of plate 533. A pillow block 539 and 541 is slideable along each rail. The pillow blocks 539 and 541 support a carriage 543 on which the mechanisms of the pick-and-put tool are mounted. The carriage 543 is moveable along the rails 535 and 537 (horizontally) by a transport cylinder 545 through a yoke 547 and a drive bracket 548 (Fig. 31). The transport cylinder 545 is supported on plate 533. The inward and outward movements of the carriage 543 are limited by a stop assembly 549. This assembly 549 includes a horizontal bar 551 threaded at the outer end and having a collar 553 (Fig. 30) at the inner end. The "inner end" means the end towards the guide tube 543; the "outer end" means the end away from the guide tube. The bar 551 is threaded onto a bracket 555 secured to horizontal plate 533 and locked by nut 557. The position of the bar 551 on the bracket 555 is adjustable. Inwardly of the bracket 555, the bar 551 carries a nut 559 which is adjustably threaded along bar 551 and locked by nut 561. The inward movement of the carriage 543 is limited by the abutment of the collar 543 in the inner surface of a wall 563 of a box-like structure 565 on the carriage. The outward movement of the carriage 543 is limited by the abutment of the outer surface of wall 563 on nut 559 (Fig. 30). Typically, the carriage moves over a range of about 11 inches.

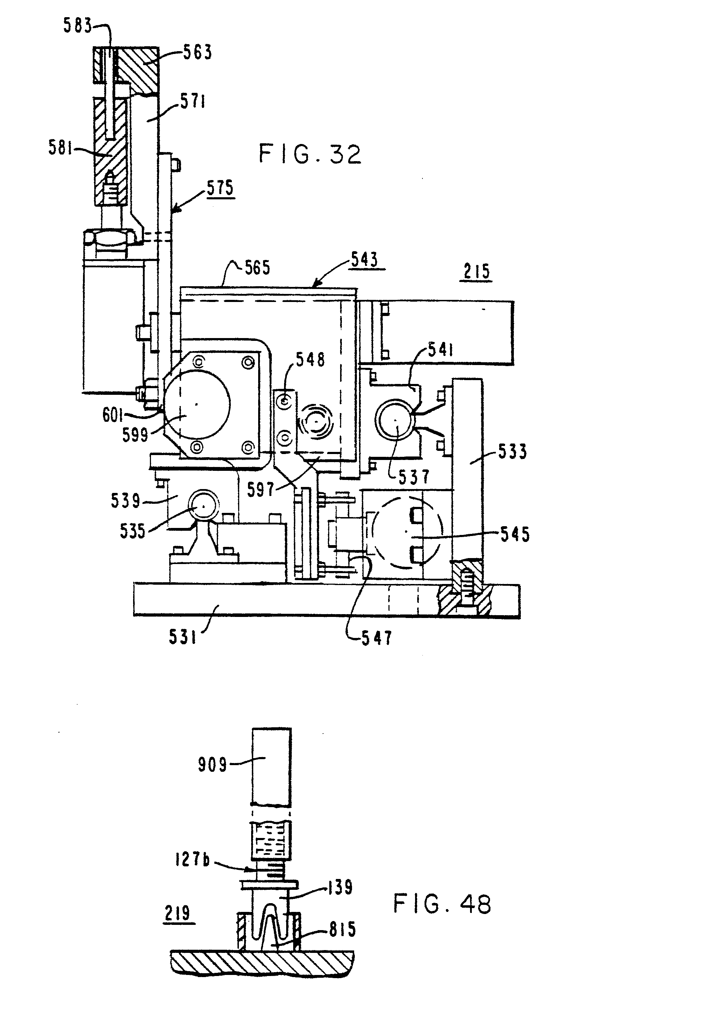

The pick-and-put tool includes a clamp 566 having a fixed jaw 567 and a moveable jaw 569 (Fig. 29). These jaws are closed to engage an old nut fragment to be removed or a new nut 135 (Figs. 25, 26) to be installed. The fixed jaw 567 extends from an arm 571 which is mounted on the outer arm 573 of a pivotal bell lever 575 (Fig. 32). The moveable jaw 569 extends from a slide 581 which is slideable by the piston rod 577 of cylinder 579. The slide 581 carries pins 583 which are slideable in bushings in the

0164991

arm of the fixed jaw 567, towards and away from the fixed jaw (Fig. 29). The bell lever 575 is bolted at its elbow to a pivot shaft 585 (Fig. 30) rotatable on a bearing 587 supported from a wall 589 of box structure 565 by a block 591. The bell lever 575 is pivoted by movement of guide 593 (Figs. 29, 30) along guide bar 595 which is supported on wall 563 and the opposite wall 597 of the box-like structure 565. Guide 593 is slideable along guide bar 595 by the piston rod 598 of cylinder 599. Near its inner end, the inner arm 601 of lever 575 carries a slide 603 (Fig. 30) which slideably engages a slot 604 (Fig. 29) in guide 593 to pivot the lever horizontally towards and away from an LGT flange 125 or a hopper 218 as the guide 593 moves along guide bar 595. The "inner end" of lever 575 is defined as the end away from the jaws 565 and 567 and the "outer end" is defined as the end toward the jaws. Pivot shaft 585 (Fig. 30) is connected through a coupling 605 to the piston rod 607 of lift cylinder 609 which raises the bell lever 575 and the jaw assembly connected to it when it is necessary to clear walls of the flange 125 or of the hopper 218. The horizontal swing of the jaws 567 and 569, i.e., of the clamp to the LGT 113 or to the hopper 218 (Fig. 33) is limited by a bolt 611 which is threaded into the fixed jaw 567. In the advanced or pivoted position the clamp 566 is stopped by the engagement of the end 612 of the bolt 611 with the G/T flange 125 in the outward position and the hopper 218 in the inward position. The bolt 611 is locked in any position by a nut 613.

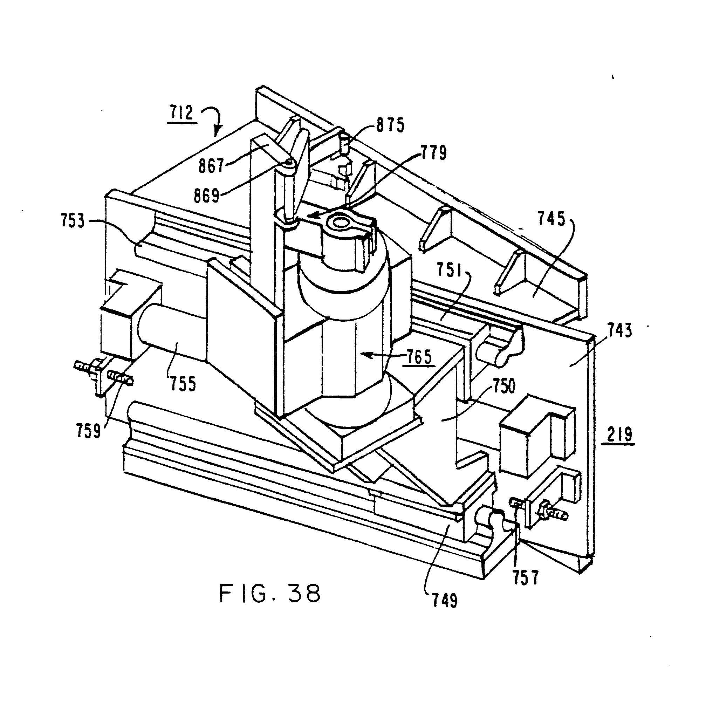

Fig. 34 shows the new-nut hopper 218 in horizontal position as it would appear from above the pool. The nut hopper 218 is supported by a bracket 711 (Fig. 34) which extends from the bracket 712 (Fig. 38) that supports the pin-insertion/torque tool 219, to an elevation where each nut 135 (Figs. 25, 26) is in position to be removed from the hopper 218 by the pick-and-put tool 215. This elevation is also such that the nut, when removed by the pick-and-put tool is properly positioned for insertion in the counterbore 130 (Figs. 23, 27) of the flange 125 of the LGT. The bracket 711 carries a horizontal plate 713 at the top from which a horizontal circular plate 715 is supported. This plate extends over an angle of bout 270° and has a grooved annulus 717, which may be described as a nut magazine. New nuts 135 are arrayed in the annulus. The nuts 135 in the groove 717 extend above the upper rim 719 of the groove so that they may be engaged by jaws 567 and 569 of the pick-and-put tool 215 (Fig. 35). Near an end the magazine 717 has a loading port 721. The loading port 721 has a funnel 722 (Fig. 34) to facilitate loading of nuts 135, one by one, in the magazine from above the pool through a long tube (not shown). At the opposite end the magazine 717 has a stop 723 which defines an unloading part. At this end each nut which abuts the stop 723 is in position to be removed by the pick-and-put tool 215. A rotary hydraulic cylinder 725 is supported from plate 713. This rotary cylinder 725 carries an arm 727 which when actuated by the cylinder advances nuts arrayed in the magazine 717 counterclockwise, as viewed with respect to Fig. 12, towards the stop 723 so that each nut in the array, in its turn, is in position to be removed by the pick-and-put tool 215. Typically about 24 nuts can be arrayed along the magazine 717. A switch is embedded in the plate 713 near the stop 723. The underside of the arm 727 has a bracket on which a magnet is supported. When the arm 727 swings to a position near the stop 723, this switch is actuated transmitting intelligence to the robotic control center on the deck that the hopper is empty.

The plate 713 extends beyond the circular plate 715 on the side opposite to the loading port 721. This plate carries a supporting plate 733 for the split pin loading guide 735 of the pin-insertion/torque tool 219 and its funnel 737. The plate 713 also carries stop 739 for the wrench 741 of the pin-insertion/torque tool.

Fig. 38 shows the hopper and pin-insertion/torque tool as they would appear if viewed from a point directly over them above the pool, i.e., as they would appear if their outlines were projected on a horizontal plane. The components of the pin-insertion/torque tool 218, aside from the funnel 737, are mounted movably on a vertical base plate 743. The base plate 743 is suspended from the edge of a horizontal trapezoidal-shaped plate 745 of the angle bracket 712 (Figs. 37, 38). The angle bracket 712 is mounted on a cluster plate 747 which is in turn suspended from strong back 748 (Fig. 38). The actuating components of the pin-insertion/torque tool are mounted on a carriage 750 which is moveable on slides or pillow blocks 749 and 751 (Figs. 37, 38) that are slideable horizontally on tracks 753 by transport cylinder 755 (Fig. 37). Stops 757 and 759 are provided; these stops engage the pillow blocks 749 and 751 to limit the advance movement and the retract movement respectively of the components. In the advanced position 742, the wrench 741 is set to thread the nut 135 onto the threaded section 145 of the new split pin 127b (Figs. 25, 26, 41). In the storage position 744, the new pin 127b is loaded into the pin-insertion/torque tool 218.

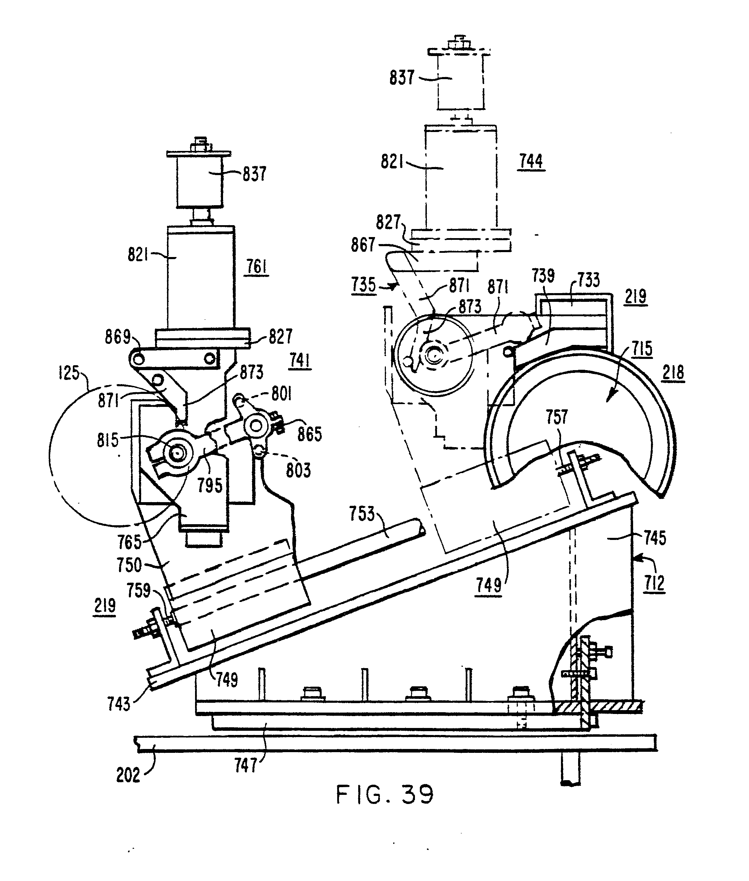

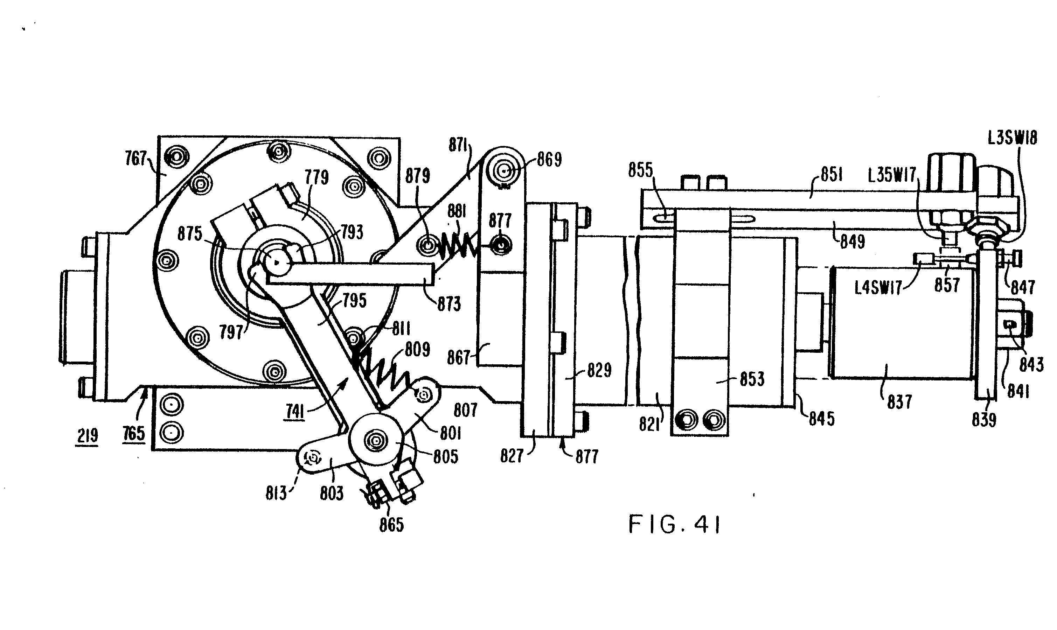

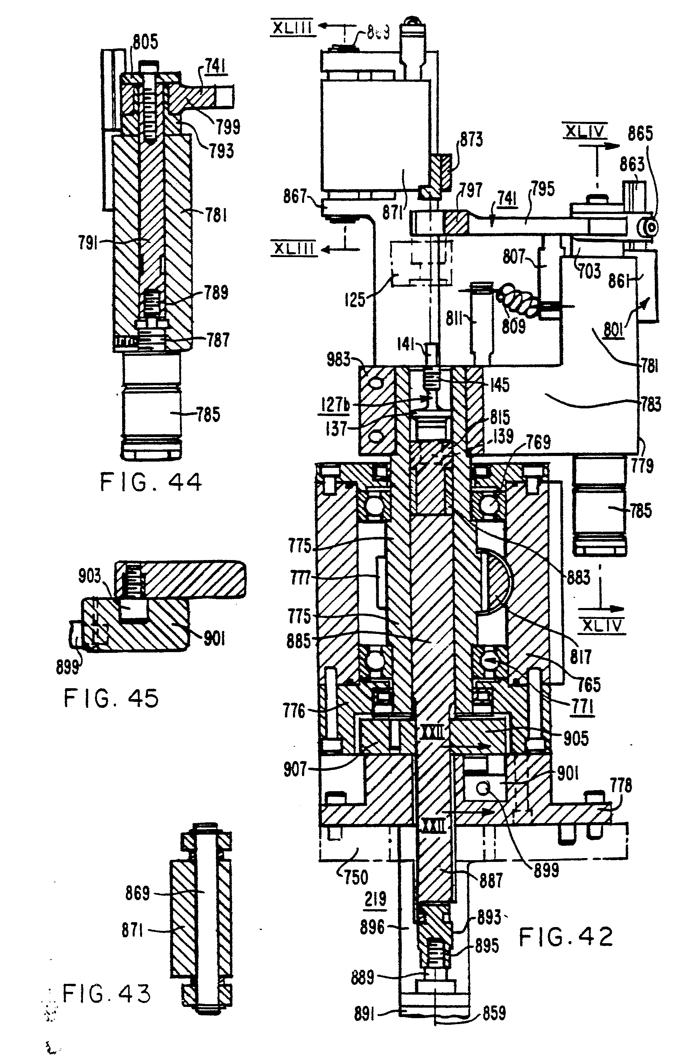

The pin-insertion/torque tool includes a housing 765. Internally, the fixed races 769 of ball bearings 771 are supported on the wall of the housing 765 (Fig. 41). The rotating races 773 are carried by a hollow shaft 775. The bearings 771 are held axially by a bearing retainer 776 bolted to housing 765. The bearing retainer 776 is mounted on an adapter 778 bolted to carriage 750. A pinion 777 (Figs. 41, 45) is mounted rotatable with the shaft 775. The shaft is shouldered at its outer end and a wrench arm 779 (Figs. 39, 41) is clamped to the shouldered end. The wrench arm has a hollow member 781 at right angles to the member 783 clamped to the shaft 775. A lift cylinder 785 is mounted at one end of the opening in the hollow member 781 by a sleeve 787 (Fig. 43). The piston rod 789 of the cylinder is threaded into the end of an actuating rod 791 which is slideable in the opening of the member 781. At the opposite end a bushing 793 is secured to the rod 791.

34                           **0164991**

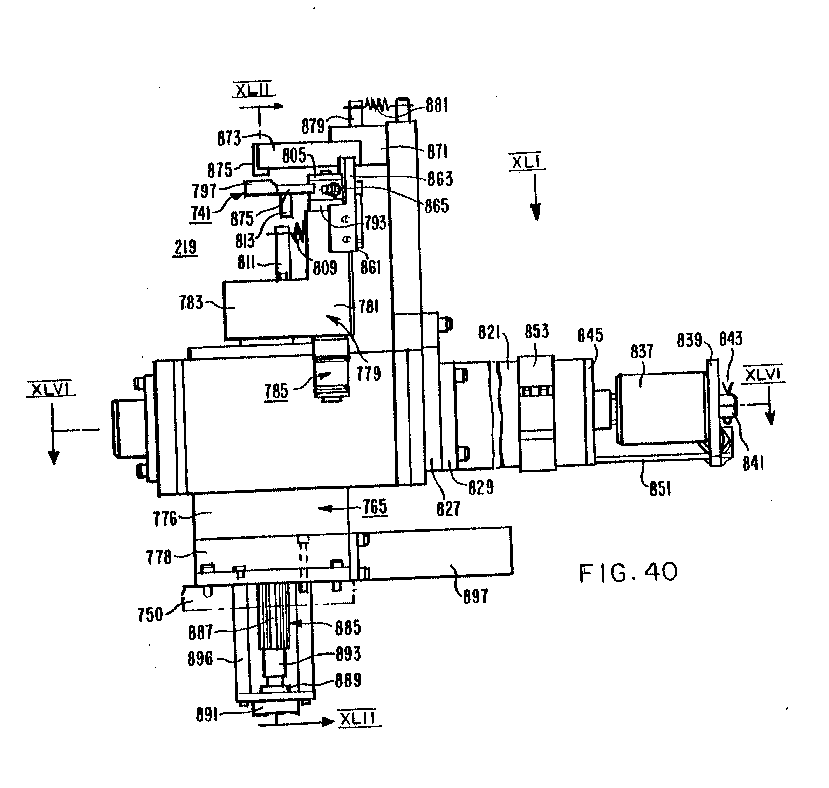

The wrench 741 includes an arm 795 having a splined head 797 at one end and a supporting eyelet 799 at the opposite end. At the eyelet end arms 801 and 803 extend laterally from the wrench (Fig. 40). The wrench is pivotally supported on the stem of bushing 793 (Fig. 43) between the flange of the bushing and a retainer 805 which is bolted to the end of actuating rod 791. When the cylinder 785 is actuated, the actuating rod 791, the bushing 793, the wrench 741 and the retainer 805 are raised to clear a nut 135 which is being torqued and to enable the wrench to be reset for a succeeding torquing operation.

The arm 801 carries a pin 807 (Fig. 40). A spring 809 extends between pin 807 and a pin 811 extending from the clamped member 793 of the wrench arm 779 (Fig. 41). The spring 809 centers the wrench 741 with its head 797 over the position where the nut 135 is to be inserted in counterbore 131 of the flange 125 of the LGT 113 (Figs. 23, 27); i.e., coaxial with the shaft 775. The arm 803 also carries a pin 813. When the pin-insertion/torque tool 218 is in storage position 744 (Fig. 38), the pin 813 is engaged by the end of stop 739 and the wrench 741 is pivoted away from its center position against the action of the spring 809 so that a new pin 127b may be positioned on blade 815 (Figs. 34, 41, 47). When the pin-insertion/torque tool is removed from position 744 (Fig. 38) the wrench head 793 is returned to the torquing position by spring 809.

The pinion 777 is rotated back and forth over a predetermined angle, typically 36°, by a rack 817 (Fig. 45). The rack 817 is reciprocated on ball bushings 819 by a cylinder 821 whose piston rod 823 is connected to a spring pin 825 which is threaded into one end of the rack. An annular cylinder adapter 827 is bolted to the housing 765 (Figs. 39, 45). The pedestal 829 of the cylinder 821 is bolted to the adapter 827. The piston rod 823 slides in a bushing 831 in the pedestal. The piston (not shown) of the cylinder 821 is double ended having a piston rod which

35

**0164991**

extends from the end opposite to the rod 823. This opposite rod has an extension 833 (Fig. 45) which is connected through a threaded pin 835 with a cylindrical stop 837 of generally C-longitudinal cross section and to a target 839. A nut 841 is secured to the pin 835 by a cotter pin 843. By rotating the nut 841 in one direction or the opposite direction, the stop 837 maybe raised or lowered. On the forward movement of the piston and of the rack 817 the forward end of stop 837 contacts the top 845 of cylinder 821, limiting the forward movement of the rack and the angle over which the pinion 777 is rotate. The piston (not shown) of the cylinder 821 moves at a relatively low speed so that no damage occurs by reason of the contact of the stop 837 and the top 845 of the cylinder. By setting the position of the stop precisely, the angle over which the pinion 777 rotates may be precisely set. The target 839 carries a magnet 847. This magnet actuates switch L3SW18 in the most outward position of the piston rod extension 833 and switch L3SW17 in the most inward position of the extension. Switches L3SW18 and L3SW17 are carried on bars 849 and 851 which are bolted to a clamp 853 secured to cylinder 821. Bar 849 has a longitudinal slot 855 so that the bar can be slid upwardly or downwardly to align magnet 847 with switch L3SW18 in the most outward position of the extension 833. To achieve better precision than can be achieved by proximity switch L3SW17, a microswitch L4SW17 is provided. This switch is actuably by a stud 857 on stop 837 in the most inward position of the rack 817.

When the pin-insertion/torque tool 219 is in use in torquing or untorquing a nut 135, the splined head 797 is positioned coaxial with the shaft 775 (Fig. 41). The translational movement of the rack 817 in one direction or the opposite direction, rotates the wrench about the axis 859 of the shaft 775. A stop 861 is suspended from the end of member 781 of wrench arm 779 (Fig. 39). The stop 861 has an extension 863 which overhangs the end of member 781 and is engaged by a set screw 865 on the end of the wrench

0164991

741. The stop 861 maintains the wrench head 797 centered on the axis 859 preventing the spring 809 from pulling the wrench head 797 off the axial position.

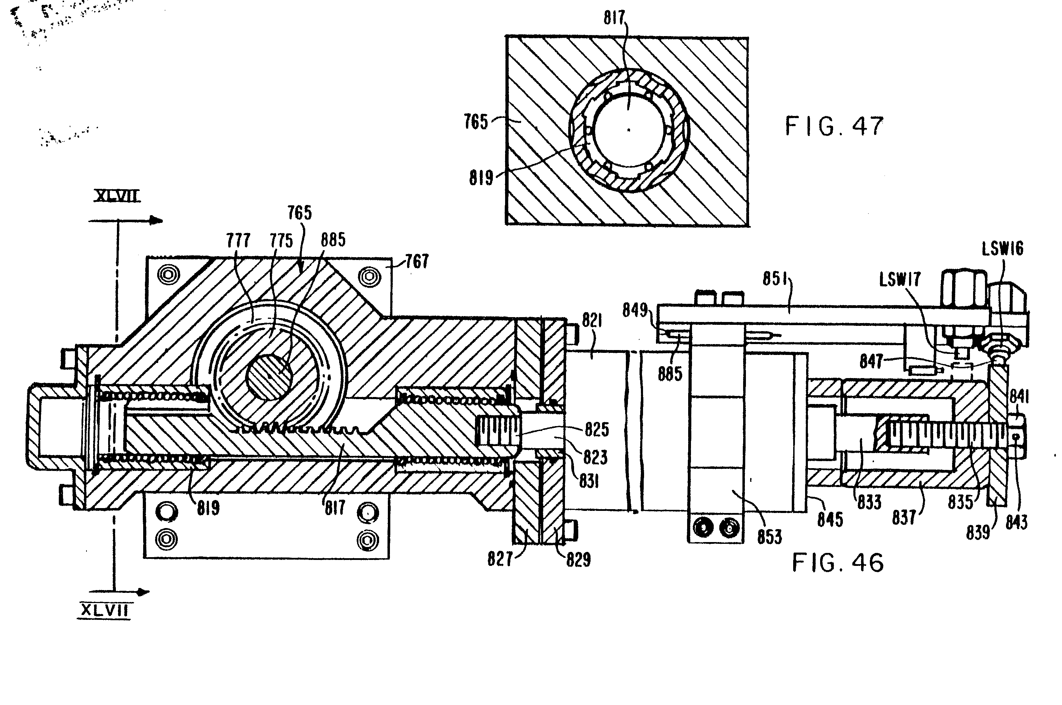

The cylinder adapter 827 carries a pivot arm 867 on its surface opposite the pedestal 829 (Fig. 39). The pivot arm 867 carries a pivot pin 869 (Fig. 42) at its end overhanging the adapter 827. The pin 869 pivotally supports a linkage 871 which carries a stop arm 873. The stop arm carries a hold-down pin 875 at its end (Figs. 37, 39, 40). The pivot arm 867 carries a spring pin 877 intermediate its ends and the linkage 871 carries a pin 879 intermediate its ends. A spring 881 is connected to the pins 877 and 879. In the normal use of the pin-insertion/torque tool 219, the spring 881 positions the hold-down pin 875 coaxially with the shaft 775 and the head 797 of the wrench 741. The pin 875 holds down a nut 135 while it is being torqued. When the nut is being untorqued, the pin 875 holds down the nut 135 so that the untorquing releases the pin 127b. When the pin-insertion/torque tool 219 is set in the pin-loading (storage) position 744 (Fig. 38), the stop arm 873 engages the funnel 737 so that the pin 875 is removed from the position over the blade 815 (Figs. 41, 47) and a new pin 127b may be mounted on the blade.

The blade 815, on which the new split pin 127b is mounted, is seated in, and pinned to, a bushing 883 at the end of a rod 885 which is splined at the end 887 (Figs. 39, 41). The rod 885 is connected at the splined end to the piston rod 889 of a cylinder 891 through an adapter or coupling 893 and a spring pin 895. The cylinder 891 is supported on a bracket 896 connected to adapter 893. The piston 891 is actuable to advance rod 885 and an new pin 127b mounted on (straddling) it into the lower counterbore 162 of an LGT into engagement with a new nut 135.

It is necessary that the tines of the two split pins 127b which are inserted in an LGT 113 be oriented at 90° with reference to each other. This orientation is achieved by cylinder 897 (Fig. 39). Cylinder 897 is mounted on adapter 778. Its piston rod 899 (Fig. 41) penetrates slideably through the adapter and engages a cam block 901 moveable within a groove within the adapter (Figs. 41, 44). The cam block 901 has a groove in which it engages a cam follower or roller 903 (Fig. 44). The roller 903 is connected to a rotary actuator 905 splined to rod 885 and rotatable on bushing 907 (Fig. 41). Movement of the piston rod 899 from its neutral position in either direction turns the rod 885 and a pin 127b connected to it by 45° in one direction or the other thus orienting one pin 127b at 90° to the second pin.

In installing a new split pin 127b on the blade 815, the new pin is initially threaded onto the end of a long tube 909 (Fig. 47). The pin-insertion/torque tool 219 is moved to storage position 744 (Fig. 38) where the stop 739 and funnel 737 expose the blade 815. The tube 809 is then manipulated so that the tines 129 of the split pin which it carries straddle the blade 815. The tube 809 is then unscrewed and removed and the tool 219 carrying the new split pin 127b is returned to its processing (advanced) position 742.

The split pin 127b on blade 815 may now be secured in the flange 125. The split pin is appropriately oriented by actuating cylinder 897 in one direction or the other. Earlier the nut 135 was deposited in the upper counterbore 131 (Fig. 27) by the pick-and-put tool 217. Cylinder 891 (Figs. 39, 41) is actuated to advance the shank of the new split pin 127b through the hole in the flange 125 into threading contact with nut. Ejection of the nut is prevented by pin 875 (Figs. 37, 40). With the wrench 741 set in advanced position from (above) the nut 135 by cylinder 785, the wrench is set in the angular position to thread the nut 135 onto the split pin by cylinder 821. The wrench 741 is now retracted by cylinder 785 to a position in which its splines are set to engage or do engage the splines on the nut. Cylinder 821 is now actuated to turn the wrench so that the nut 135 is threaded onto pin 127b over the angle of turn of the wrench, typically 36°. During the first turn, the splines on the wrench engage the splines on the nut if they are not initially engaged. Cylinder 785 is now actuated to cause the wrench 741 to disengage the nut and be advanced away vertically from the nut. The wrench is reset by cylinder 821 and the above threading operation is repeated. The threading continues until the wrench seats on the base of the counterbore 147 and stalls.

Limit switch L3SW18 is actuated on each stroke of wrench 741. On each actuation of L3SW18, a relay (not shown) is actuated. As disclosed in Calfo the apparatus includes a counter and a display for displaying counts. The counter and display are actuated on each actuation of the relay. Typically about 70 strokes of the wrench 741 are required to seat the nut 135 properly on low torque. If the wrench is stalled before the appropriate number of counts is displayed, a maloperation has occurred and the new nut 135 must be untorqued, the new nut and new pin 127b must be discarded and the operation must be repeated. The strokes of the wrench can also be counted by the computer. However, the separate counter has the advantage that it is available even if the operation is manual or the computer is disabled. After the stall is reached, the wrench 741 is reset and precisely determined high torque is applied to tighten the nut 135. The high torque is applied by cylinder 821 through the rack 817 and pinion 777. The high torque is derived through a valve from a high pressure line whose pressure is precisely determined.

Typically the nut 135 has 10 splines uniformly spaced at 36° between adjacent splines around its periphery. During the initial threading operation, the nut and wrench mutually adjusts themselves so that the splines of the wrench enter the grooves between the splines of the nut. During the first and each subsequent operation, the wrench is turned over a precisely determined angle,

**0164991**

typically 36° so that the splines of the wrench 741, as it is lowered, precisely engage the grooves between the splines in the nut 135. The wrench is turned and raised laterally of the wall of the LGT113 clearing the lip of the opening in the LGT above the nut 135. On each completion of the strokes of the wrench 741, limit switches L3SW17 and L4SW17 (Fig. 40) are actuated. In addition, the cylinder 821 has a pressure switch which closes when cylinder 821 has advanced the wrench to the end of its stroke. On each stroke which occurs before the wrench 741 is stalled on low torque, switches L3SW17 and/or L4SW17 close before the pressure switch. When the wrench stalls, it stalls before the end of the stroke. The pressure switch closes but limit switches L3SW17 and/or L4SW17 do not close or close after the pressure switch. The closing of the pressure switch and L3SW17 and/or L4SW17 each turns on a light. When the light for limit switches L4SW17 turn on and the light for the pressure switch does not turn on or turns on after the light for the limit switches, the operator is informed that the wrench 741 has stalled on low torque.

The same signalling occurs on high torque. The high torque is applied by energizing a solenoid. When the pressure reaches the preset magnitude, a pressure switch closes. Before the wrench stalls on high torque limit switches L3SW17 and/or L4SW17 close before the latter pressure switch. When the wrench 741 stalls on the precise high torque, switches L3SW17 and/or L4SW17 close but the pressure switch either does not close at all or closes after the limit switches. Light signals are turned on corresponding to the operation of the switches.

It is essential that the nut 135 be secured so that it does not become separated or unthreaded from the pin. The old nut 130 (Fig. 23) which is threaded onto the old pin 127a is held by across pin 910 which is welded to the nut at both ends. This structure is not feasible for the new pin 127b and nut 135 because the welding of the new nut cannot be carried out under water. The new pin 127b extends above the nut 135 (Fig. 27). The nut 135 as fabricated for threading to the pin has secured to it the locking cap 157 (Fig. 26) whose tubular section extends to the level of the stem 141 of the pin 127b. After the nut is threaded onto the pin 127b, the locking cap is securely crimped in opposite grooves 143 in the pin preventing unthreading of the nut from the pin.

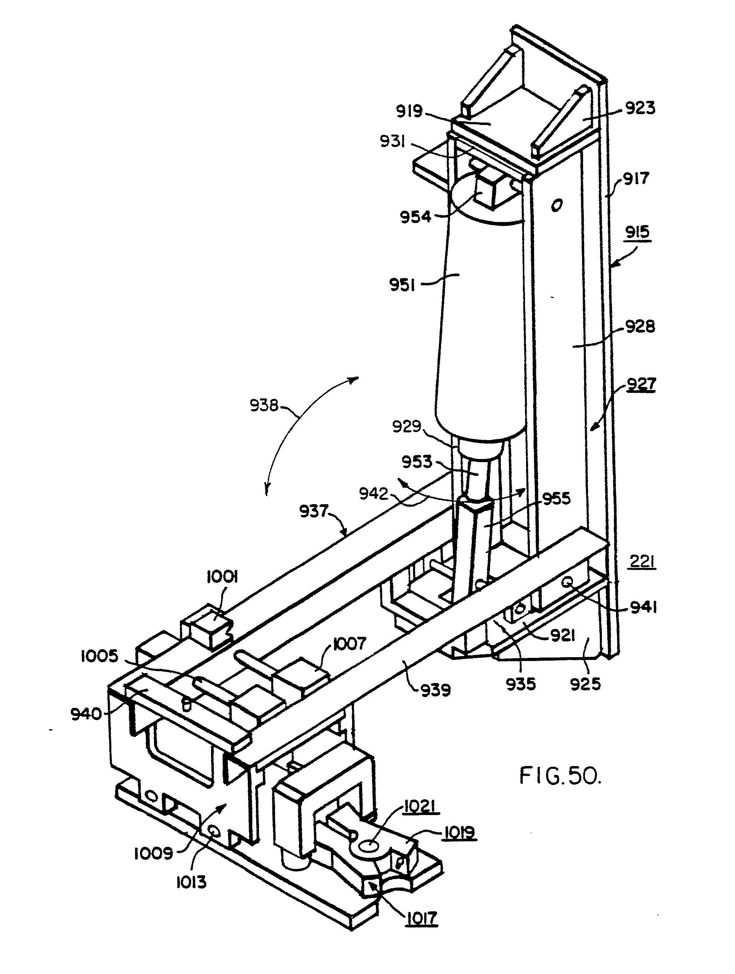

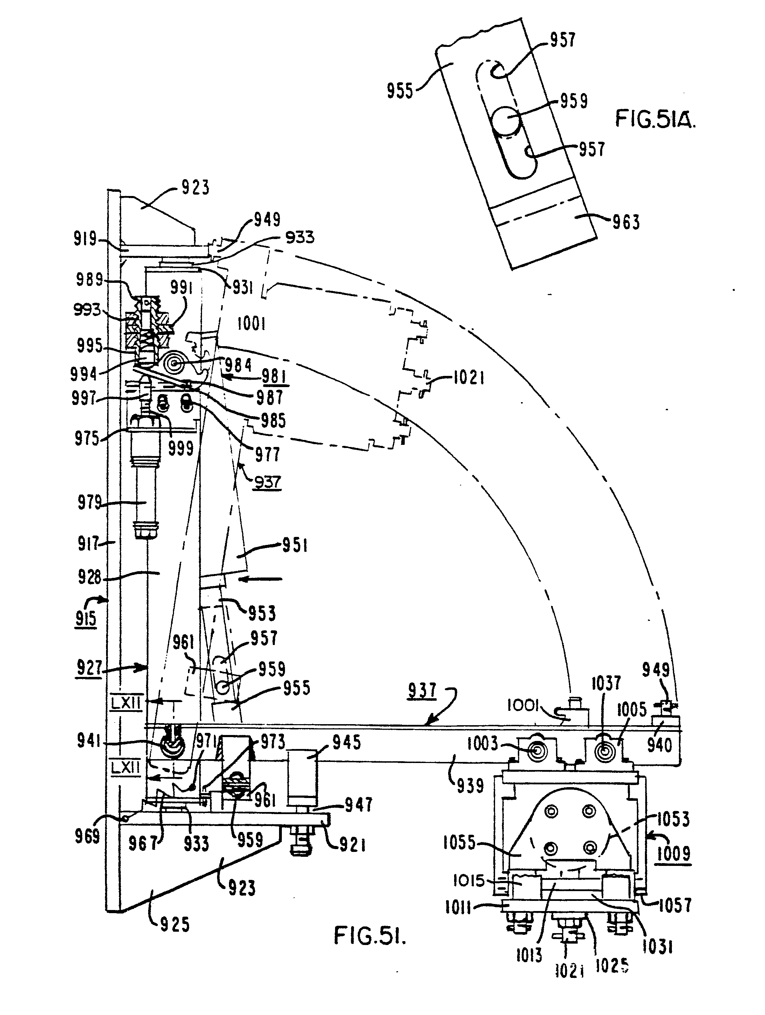

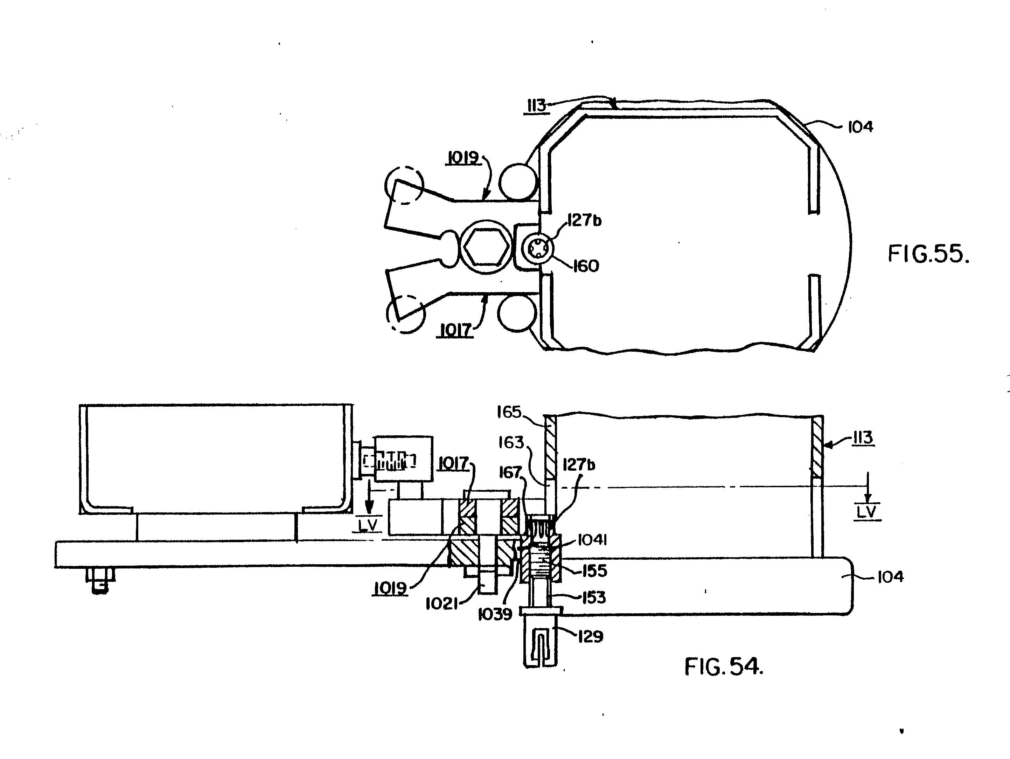

Figs. 47 and 48 show a new split-pin assembly 100 mounted on the upper counterbore 102 of the flange 104 of an LGT 113. The split-pin assembly 100 includes a new split pin 127b and a new nut 135. The new split pin 127b has an upper stem 137 in which two pair of oppositely disposed flutes 139 are provided. A collar 141 extends from a shoulder at the top of the nut 135. The collar 141 has diametrically disposed circular holes 155. The nut 135 is fabricated with a locking cap 157 securely crimped into the holes 155. The locking cap 157 has a pedestal 159 from which a cylindrical shell 160 extends. The shell 160 is coaxial with, and encircles, the stem 137 having the flutes 139. As mounted on the flange 104, the new split-pin assembly 100 extends into the "mousehole" 163 and is straddled by the edge of the wall 165 of the guide tube 130. In accordance with the invention a crimping tool 221 (Figs. 50-64) and crimping method are provided for crimping the shell 160 into the flutes 137. The crimping must be such that the locking cap 157 joins the nut 135 and the split pin 127b so securely that rotation of one relative to the other under the forces exerted by the coolant of the reactor is precluded.

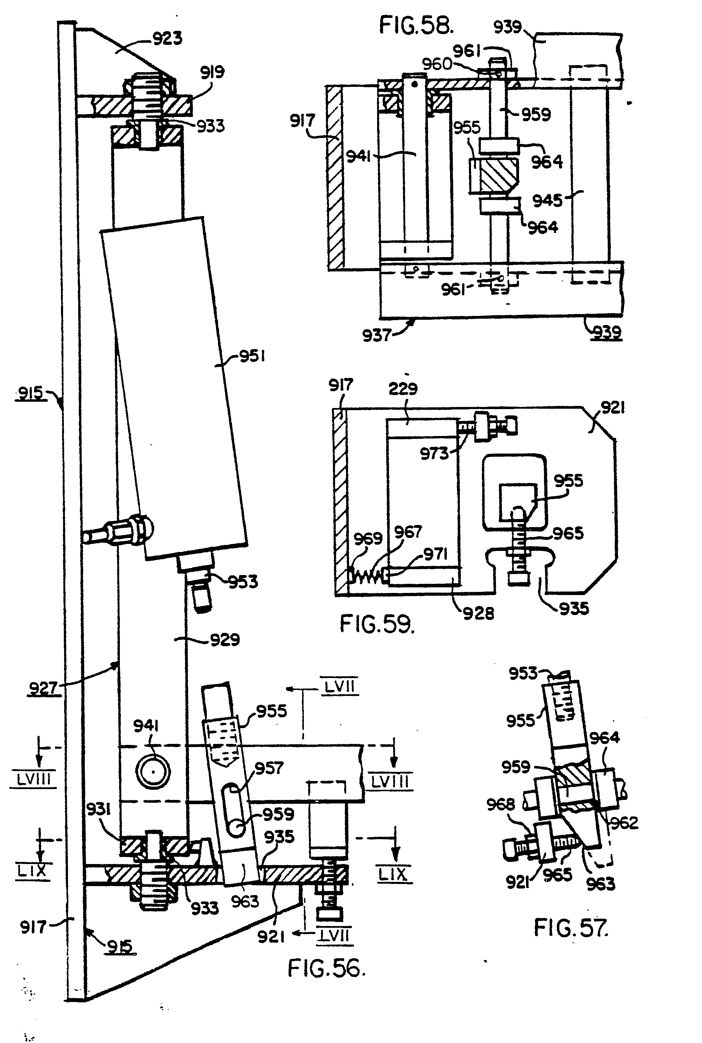

The crimper tool 221 is provided for crimping the locking cap 167 to flutes in the pin 127b. This crimper tool includes a support 915 formed of a vertical plate 917 having welded near its top and bottom horizontal plates 919 and 921 braced by trapezoidal plates 923 and 925. The vertical plate 917 is mounted on a cluster plate (not shown) which is in turn suspended from a strongback (not shown) supporting the robotic tools in the work station which carry out the replacement of the old split-pin assemblies by the new split-pin assemblies. The plate 921 has a slot 935 (Figs. 50, 58). A frame 927 having vertical sides 928 and 929 and horizontal sides 931 is mounted pivotal about a vertical axis on flanged bushings 933 secured to the top and bottom support plates 919 and 921 and engaging the horizontal sides 931 so that their centers define the pivot axis.

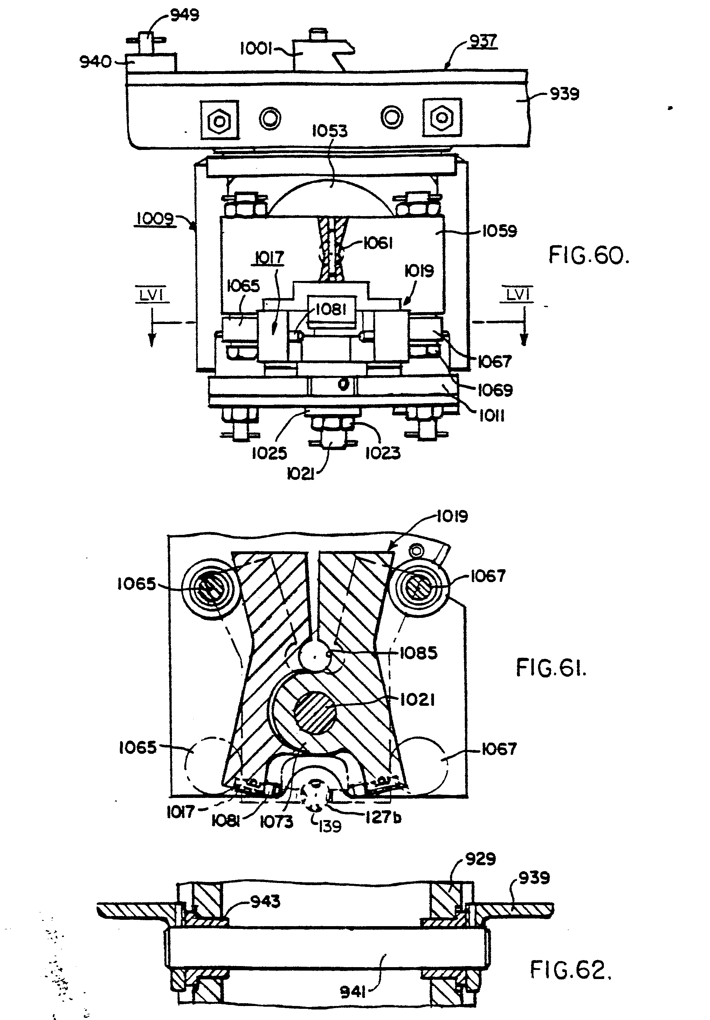

An angle support 937 formed of angles 939 braced by a cross plate 940 is mounted pivotably at one end on the frame 927 on a pin 941 (Fig. 62) extending between the vertical sides 928 and 929. The pin rides in bushings 943 in the sides 928 and 929. The angle support 937 is pivotal on the pin 941 between the operating position shown in full lines in Fig. 51 and the retracted or storage position shown in broken lines. The angle support 937 carries a stop bracket 945 which engages adjustable stop bolts 947 extending near the ends transversely of the bottom plate 921 of the fixed support 915. Being suspended from the frame 927, the support 937 is also pivotal about the vertical axis about which the frame is pivotal. Arrow 938 (Fig. 50) shows the direction of the vertical pivoting movement of support 937 about pin 941 and arrow 942 shows the direction of the horizontal pivoting movement about the axis of the flanged bushings 933. The bracket 945 and the stops 947 prevent the angle support 937 from dropping below the plate 921. The angle support 937 also has an adjustable stop 949 which abuts the end of the top plate 919 when the angle support is in the retracted position. With reference to Fig. 51, the angle support 937 is pivoted vertically in the plane of the drawing and horizontally into and out of the drawing. It is to be realized that under certain circumstances the crimper tool 221 and the split-pin assembly may be oriented so that the frame is supported in another position than vertically and may be pivoted first directly out of this position and thus in a direction transversely or laterally to the first direction.

42

The angle support 937 is pivoted between the operating and the retracted positions by a cylinder 951. The cylinder 951 is pivotally suspended on a pin 952 passing through a clevis 954 which is bolted to the upper side 931 of the frame 927. The piston rod 953 of the cylinder 951 has an extension 955 which carries a slot 957 (Figs. 51, 56). The slot is engaged by a pin 959 carried by plates or tabs 961 welded to the angles 939. The pin 959 is secured in tabs 961 by cross pins 964. The pin 959 is positioned in the slot 957 between bronze bushings 962 in collars 964 (Fig. 57). Below the slot 957 and pin 959, the piston-rod extension 955 has a cam surface 963 (Fig. 57) which extends into slot 935 in bottom plate 921. The cam surface 963 (Fig. 57) is engaged by the tip of a bolt 965, which serves as cam follower, and which extends into the slot 935 from lower plate 921. The position of bolt 967 is adjustable. In any position, the bolt 965 is locked by nut 968 against plate 921.

With the angle support 937 in retracted position, the tabs 961 are in the position shown in broken lines in Fig. 51. With the sides (as distinct from the ends) of slot 957 in engagement with pin 959 so that the upper side can exert a downward impingement of force on the pin. When the piston rod extension 955 is moved downwardly by actuation of cylinder 951, the tabs 961 are moved downwardly with the upper side of slot 957 and turned. The angle frame 937 is pivoted to the operating, generally horizontal, position and the tabs 961 are in the full line position shown in Fig. 51. The movement of the angle frame 937 is stopped by engagement of bracket 945 with stop 947. With the angle frame in this position the pin 959 is engaged with the lower end of slot 957 as shown in Fig. 51A where the slot 957 is shown in broken lines. As the piston rod extension 955 now continues to be moved downwardly by cylinder 951, the slot 957 moves to the full-line position shown in Fig. 51A. Pin 959 remains fixed and angle support 937 remains horizontal. But during the movement of the slot to the full-line position shown in Fig. 51A, the angle support 937 is pivoted generally horizontally about the axis of bearings 933 by the coaction of pin 765 and cam surface 963. This motion is produced by the action of pin 959 against a side of slot 957.

A tension spring 967 (Figs. 51, 59) connected between an anchor 969 at the inner end of plate 921 and an anchor 971 on the vertical side 928 of the frame 927 exerts a force pulling the frame 927 and the parts connected to it inwardly. Excessive displacement of the frame is prevented by a stop 973 engaging the other side 929 of the angle frame.

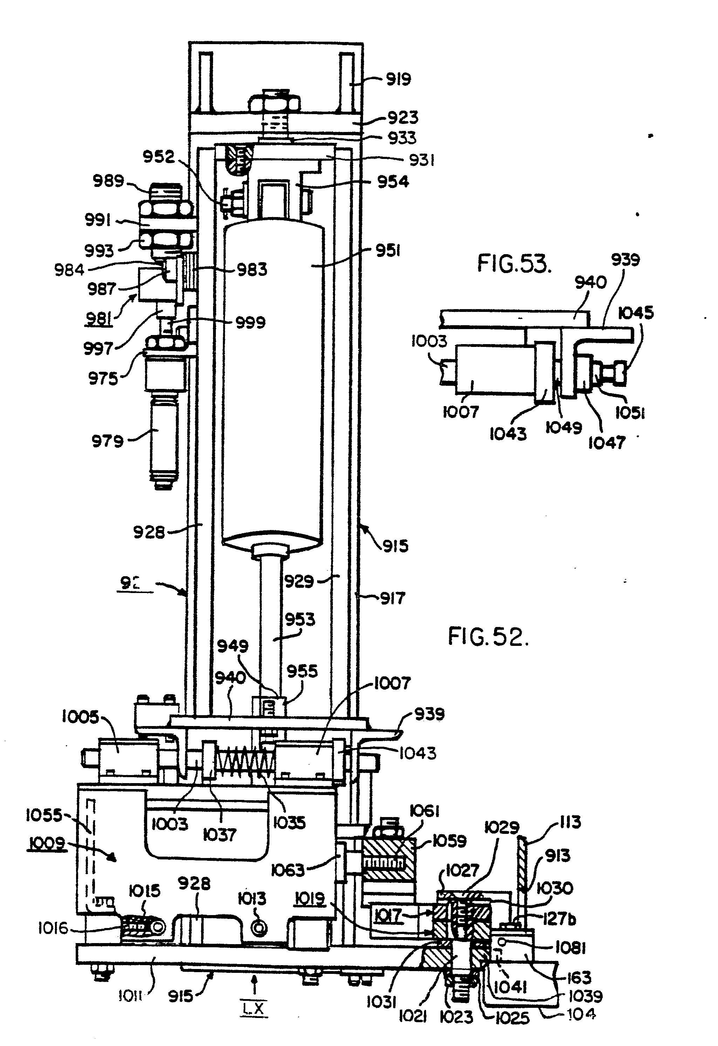

An angle bracket 975 (Figs. 51, 52) is bolted to side 928 of the frame 927. The bolts securing the bracket 975 to side 928 pass through slots 977 so that the height of the bracket 975 is adjustable. A cylinder 979 is suspended from the horizontal member of the bracket 975. A latch 981 is pivotally suspended from the side 928 on a plurality of washers 983 (Fig. 52) and a bolt 984. The latch 981 has a flat tail-plate 985 which extends inwardly and a hook 987 which extends outwardly. Above the tail plate 985 a sleeve housing 989 is threaded into a horizontal plate 991 suspended from side 928. The position of the housing 989 is adjustable along plate 991 and the housing may be locked in any position by nuts 993. The lower part of the housing 989 is widened providing a shoulder between the upper and lower parts. A spring pin 994 having a tapered tip extends through the housing 989. The pin 994 has a shoulder from which a stem extends into the restricted portion of the housing. A compression spring 995 acts between the shoulder in the housing 989 and the shoulder on the pin, resiliently urging the pin downwardly into engagement with the upper surface of tail-plate 985 and pivoting the latch 981 counterclockwise (as viewed in Fig. 51) on the pivot 984. The force of the spring is counteracted by the cylinder 979. This cylinder has an extension 997 on its piston rod 999 which engages the lower surface of tail-plate 985 and pivots the latch 981 clockwise. The angle support 937 carries a strike or hook 1001. When the angle support is retracted, the piston rod 999 of cylinder 979 is retracted so that the latch 981 is swung to its most counterclockwise position engaging hook 1001 securing the angle support 937 and the components which it carries in the retracted position. When the angle support is to be set in the operating position, the piston rod 999 is extended rotating the latch 979 clockwise and disengaging hook 1001.

Near the end remote from the support, guide rails 1003 are secured to the vertical members of the angles 939 (Figs. 51, 52). Pillow blocks 1005 and 1007 are slideable along the guide rails. The pillow blocks 1005 and 1007 support a carriage or housing 1009. The carriage 1009 supports a base plate 1011 on rods 1013. The rods 1013 penetrate through blocks 1015 welded to the base plate 1011 (Fig. 51). The base plate and the parts connected to it may be moved along the rods 1013 relative to carriage 1009 so that its position in the direction perpendicular to the axes of the rails 1003 (along the plane of Fig. 51 parallel to beams 939) may be set. The base plate 1011, once set, is secured in the set position by set screws 1016 (Fig. 52). Crimping jaws 1017 and 1019 are mounted pivotally on a pin 1021 secured near the outer end of the base plate. The pin 1021 is secured by a locking nut 1023 which is threaded onto the lower end of the pin 1021 and engages a washer 1025 between the nut and the plate 1011 (Figs. 51, 52). At the top the pin 1021 is secured to an angle block 1027 by a cap screw 1029. A washer 1030 is interposed between the block 1027 and the pivoting bearings of the jaws but engages a shoulder on pin 1021 clearing the bearings. Another washer 1031 is interposed between the base plate 1011 and the pivoting bearings of the jaws and a shoulder on pin 1021.

Each guide rail carries a compression spring 1035 (Fig. 52). Each spring engages pillow block 1007 at one end and is engaged by a member 1037 clamped to the guide rail at the opposite end. The springs 1035 resiliently urge the pillow blocks 1007 and the parts connected to them including the base plate 1011 outwardly; i.e. away from support plate 917; to the right as seen in Fig. 52. At its outer end, the base plate 1011 has a downwardly facing shoulder 1039. Above this shoulder the base plate terminates in a cylindrical surface 1041 (Figs. 50 and 52) which has the same curvature as the nut 135 of the new split-pin assembly. The relative position of the crimper tool 221 and the pin-insertion/torque tool on the strongback is such that when the angle support 937 of the crimper tool 221 is moved to the operating setting (full lines Fig. 51) the coaction of the pin 965 and cam surface 963 (Fig. 57) advances (pivots about the axes of bushings 933) the base plate 1011 and the parts mounted on it outwardly with reference to support 915 (Fig. 48) (to the right as seen in Fig. 48). The shoulder 1039 seats on the top of the flange 125 of the LGT 113, whose old split-pin assembly is replaced by new assemblies 100, and the cylindrical surface 1041 seats precisely against the new nut 135 (Figs. 52, 55). The springs 1035 hold the surface 1041 in resilient engagement with the nut 135. The pin-insertion/torque tool is, during this operation, in the retracted position with the pin 127b on its blade.

Near the outer end the pillow blocks 1007 engage a plate 1043 (Fig. 53) which is slideable on the rails 1003. This plate is connected to the carriage 1009. The position of the plate 1043, longitudinally of the rails 1003, is adjustable by bolts 1045 each of which is threaded into a boss 1047 on each angle 939 (Fig. 53). Each bolt carries a block 1049 at its inner end and may be locked in any position by a nut 1051. The position of the carriage 1009 and the parts connected to it including base plate 1011, longitudinal of the rails 1003, is thus adjustable.

A cylinder 1053 (Fig. 51) is supported horizontally in carriage 1009 on an angle bracket 1055. This angle bracket is bolted to spacer blocks 1057 supported on base plate 1011. A bearing yoke or "C"-frame 1059 is mounted on an extension 1061 of the piston rod 1063 of the cylinder 1053 (Figs. 52, 54, 60). The bearing yoke 1059 supports rollers 1065 and 1067 on bearing screws 1069. These rollers engage cam surfaces 1071 of the jaws 1017 and 1019. In Fig. 61, the rollers 1065 and 1067 are shown in full lines with the jaws in the retracted position and in broken lines with the jaws in the crimping position.

The blank for jaw 1017 is shown in Figs. 63 and 64. This jaw includes a circular hub 1073 from which arms extend. The opening in the hub is constricted at one end providing a shoulder 1075. Jaw 1019 is interlocked with jaw 1017, the constricted portion of its hub seated in the expanded portion of the hub of jaw 1017 and its lateral surface engaging shoulder 1075. The openings 1077 in the jaws are coaxial and are engaged by pin 1021 (Fig. 52). The arms of the jaws extending on each side of the hub have the cam surface 1071 on one side. Near one end each of the jaws 1017 and 1019 has an opening 1079 for a crimping pin 1081 (Fig. 61). At the same end there is an opening 1083 perpendicular to opening 1079 for a locking pin (not shown) for the crimping pin 1081. The cam surfaces 1071 have a contour such that the crimping jaws are open with the rollers 1065 and 1067 retracted (full lines Fig. 61) and closed with the rollers advanced (broken lines Fig. 61). The semicircular extension 1085 of each hub 1073 affords clearance for the closing of the jaws.

During standby the angle support 937 is latched in the retracted position shown in broken lines in Fig. 50. When a crimping operation is to take place, the LGT is positioned with one of its new split-pin assemblies oriented for crimping and the support 937 is unlatched by remote actuation of cylinder 979 (Fig. 50). Cylinder 951 is then actuated, remotely first to lower the support 937 vertically, then to swing the support horizontally (to the right as seen in Fig. 50 and into the plane of the drawing as seen in Fig. 51). The base plate 1011 is positioned with its shoulder 1039 seated on the top surface of the flange 104 of the LGT which is to be processed and its cylindrical surface 1041 is seated against the surface of the new nut 135. The crimping pins are in position to crimp the cylindrical portion 160 of the locking cap 171 into opposite flutes 153 of the new split pin 127b. The LGT 113 is so positioned that a pair of opposite flutes 153 of one of its new split-pin assemblies 100 is oriented to receive the crimped projections of the cylindrical portion 160 of the locking cap 157. Cylinder 1053 is now actuated to cause the crimping pins 1081 to engage the portion 160 and crimp it onto the opposite flutes. The flutes preclude the necessity, which would be involved in indentations, of precisely positioning the jaws 1017 and 1019 vertically to effectuate the crimping operation.

While a preferred embodiment and preferred practice of this invention is disclosed herein, many modifications thereof are feasible. This invention is not to be restricted except insofar as is necessitated by the spirit of the prior art.

48

CLAIMS:

1. Apparatus for use in the replacement of an old split-pin assembly of a guide tube of a nuclear reactor by a new split-pin assembly, said old split-pin assembly including an old split pin and an old nut securing said old split pin to a flange on said guide tube, said old nut being threaded onto said old split pin and, a skirt of said old nut which is not threaded to said old split pin extending inwardly of said flange, said old split pin and said guide tube being radioactive; said apparatus including a metal disintegration machining tool having an electrode, means for mounting said tool under a pool of water in engagement with the old nut of an old split-pin assembly of a guide tube, which old split-pin assembly is to be replaced, said tool being mounted with said electrode in position to coact electrically with said old nut, and means which is connected to said tool for firing a disintegrating arc between said electrode and said old nut, said tool being mounted so that said electrode is at an angle such that the arc produces a hole in said nut and split pin, said hole extending through the old nut, outwardly of an upper surface of the guide tube, on an entrance side of the arc and penetrating over in a region extending to a region below the unthreaded portion of the nut but not through the nut, whereby said assembly is disintegrated into readily removable fragments, without damage to the guide tube, one fragment including predominantly a portion of the old nut and the portion of the old split pin threaded to it and

49

**0164991**

another fragment includes predominantly the remaining portion of the old split pin.

2. The apparatus as in claim 1 including a guiding block of electrically insulating material connected to said electrode and to be connected to said assembly for guiding said electrode so that the old split-pin assembly is separated into fragments by arc disintegration without damage to said guide tube.

3. The apparatus of claim 4 wherein the guiding block has a cavity, an inner surface of said cavity being formed to engage the old nut, said block being mounted on a support for said tool and being movable with said tool into and out of engagement with said old nut, said block also having an opening communicating with the cavity at the inner end of said opening, the electrode passing through said opening into said cavity in position to form the terminal of a disintegrating arc between the electrode and the old nut, said electrode being movable in said opening relative to said block, and said tool also including means connected to said electrode, for advancing said electrode through said opening so as to disintegrate said old split-pin assembly progressively along the path of said electrode when an arc is fired between said electrode and contiguous parts of said old split-pin assembly.

4. The apparatus of claim 3 wherein the cavity in the block is formed so that the inner surface of said cavity not only engages the nut but also seats on the surface of the flange of the guide tube adjacent to the nut, the inner surface of the cavity being so precisely formed that by its engagement with the nut and seating on the flange the electrode which penetrates into the cavity is precisely positioned to separate the old split-pin assembly into the readily removable fragments without damage to the guide tube.

5. The metal disintegration machining tool of claim 3 wherein the cavity includes means, cooperative with the electrode, for stopping the advance of the electrode inwardly of the old split-pin assembly before the old nut is penetrated by the arc on the inward movement of the electrode, thereby preventing damage to the guide tube.

6. The apparatus of claim 1 wherein the electrode of the metal disintegration machining tool is perforated and wherein the said apparatus includes means, to be connected to the electrode, for transmitting water through the electrode into the disintegrating arc.

7. The apparatus as in claim 1 wherein one of said fragments includes a portion of said old nut and a portion of said old split pin threaded to said old nut, the said apparatus including a hopper for new nuts, and a pick-and-put tool, said hopper to contain a plurality of new nuts and including means to be connected to said new nuts for setting one of said new nuts in position to be removed, said pick-and-put tool having a clamp and means for moving said clamp, and, means positioning, said pick-and-put tool and said hopper at the same operative vertical level under a pool of water with the flange of a guide tube having said on fragment of a split-pin assembly to be replaced, and with said pick-and-put tool having said flange on one side and said hopper on the other side thereof and said clamp set so that it is moveable by said moving means between a first position where it is in clamping-and-moving relationship with said one fragment and a second position where it is in clamping and moving relationship with said one new nut, whereby said clamp is moveable from said first position to a disposal positions for said fragment and is also moveable from said second position to said flange to position a new nut in position to be threaded to a new split pin in said flange.

8. The apparatus of claim 7 wherein the moving means for the clamp of the pick-and-put tool includes means, connected to said clamp, for reciprocating said clamp between a home position and an advanced position, said clamp being in position to be engaged with the one fragment in said advanced position and being in position to engage the one new nut in the hopper in the home position, and means connected to said clamp for pivoting said clamp into clamping relationship with said one fragment when said clamp is in said advanced position and for pivoting said clamp into clamping relationship with said one new nut when said clamp is in said home position.

9. The apparatus of claim 8 wherein the pick-and-put tool includes first stop means for stopping the reciprocating means in the advanced position, said first stop means being preset so that the clamp is properly positioned to be brought into clamping relationship with the one fragment and second stop means for stopping the reciprocating means in the home position, said second stop means being preset so that the clamp is properly positioned to be brought into clamping relationship with the one new nut.

10. The apparatus of claim 9 wherein the pick-and-put tool includes third stop means for stopping the pivoting means when the clamp is in clamping relationship with the one fragment and fourth stop means for stopping the pivoting of said pivoting means when the clamp is in clamping relationship with the one new nut.

11. The apparatus as in claim 1, including a crimping tool having a crimping mechanism, a support for said crimping mechanism for use in a standby state of said tool in a generally vertical position, means connected to said support for moving and displacing said support vertically from said generally vertical position to generally horizontal position, and means which is connected to said support and is actuable when said support is in a generally horizontal position, for moving said support generally horizontally to set said crimping mechanism in position, relative to said split-pin assembly positioned to be processed, to crimp said locking cap onto said split pin.

12. The apparatus of claim 11 wherein the displacing means include a fluid actuable cylinder having piston-rod means, said first moving means including first

·0164991

means, cooperative with said piston-rod means, as it is advanced by said cylinder along a part of its throw, for moving the support between the retracted position and the intermediate position and the second moving means including second means, cooperative with said piston-rod means, as it is advanced along a second part of its throw, for moving said support between the intermediate position and the operating position.

13. The apparatus of claim 12 wherein the second cooperative means includes cam means actuable by the piston-rod means for converting the response of the support to the action of the piston-rod means from a movement in a direction generally defined by the first plane into movement in a direction generally defined by the second plane.

FIG.I.

AIR SUPPLY FROM CONT.

PIN PULLED SIGNAL TO P.C. TO END BURN

WATER SUPPLY FROM SITE

PROGRAMMABLE COMPUTER

REACTOR REFUELING POOL — 222

WATER RETURN TO POOL FROM FUNCTION-FILTRATION SYSTEM

245

225

INTERLOCK FROM MDM

216

PRESSURE RELIEF RETURN TO POOL

239

227

213

224

GENERIC POWER SUPPLY

MDM POWER SUPPLY AND CONTROL UNIT

345

CUSTOMER POWER SOURCE

214

343

341

303

125

347

218

100

315

355

328

349

353

351

357

AIR SUPPLY TO POWER DIAPHRAM PUMP TO SUCTION FILTRATION SYSTEM

AIR RETURN FROM POWER DIAPHRAM PUMP IN SUCTION FILTRATION SYSTEM

GAS SYSTEM

HYDRAULIC SYSTEM

0164991

FIG. 2.

313

227

275

225

227

L4SW16

273

267

253

257

343

317

337

315

318

L4SW15

335    341

2LS

277

347

345

IIIA    IIIA

271

251

269

261

291

307

303

247

**FIG. 3.**

271

225

ILS

**FIG. 3A.**

FIG. 4.

FIG. 6.

FIG. 5.

S/36

0164991

FIG.7.

299   301   257   267   .03   269   251

279

291

255   265   253

FIG. 9.

327

318

325

315

FIG. 8.

MDM SPINDLE

7/36

0164991

FIG. 10A.

FIG. 10.

FIG.IOB.

339

315

331

FIG.11.

315

318

319

325

329

0164991

FIG. 12.

FIG.12A.

10/36

0164991

XIIIA

337

FIG.13.

315

335

333

FIG.13A.

315

327

325

337

FIG. 14.

12/36

0164991

315

318

325

327

125

145

113

FIG.15.

XVI

303

307

247

327

325

315

113

318

147

149

100

127a

FIG.16.

13/36

0164991

125

315

327

325

113

FIG.17.

XVIII

303

325

307

113

315

247

147

149

125

127a

FIG.18.

14/36

0164991

FIG.19.

FIG. 22.

145

127a

102

152

155

FIG. 20.

FIG. 21.

FIG. 23

FIG. 24

FIG. 33

FIG. 36

FIG. 26

XXVII          XXVII

159

135          154

141

143

145

127b

137

139

FIG. 25

153

160          157

155

161

154

151

135

152

FIG. 27

FIG.29

FIG.28

FIG. 30

FIG. 31

FIG. 32

FIG. 48

FIG. 34

0164991

FIG.35

FIG.37

FIG. 38

FIG. 39

FIG. 40

FIG. 41

FIG. 44

FIG. 45

FIG. 43

FIG. 42

0164991

FIG. 47

FIG. 46

FIG.50.

FIG. 48.

FIG. 49.

FIG. 63.

FIG. 64.

0164991

FIG.51A.

FIG.51.

FIG.53.

FIG.52.

FIG.55.

FIG.54.

35/36

0164991

FIG.58.

FIG.59.

FIG.56.

FIG.57.

0164991

FIG.60.

FIG.61.

FIG.62.